# EUROPÄISCHE PATENTSCHRIFT

(11) **EP 2 368 623 B1**
(45) Veröffentlichungstag und Bekanntmachung des Hinweises auf die Patenterteilung: **22.06.2016**
(21) Anmeldenummer: 11003854.4
(22) Anmeldetag: 16.05.2007
(51) Int. Cl.: B01D 53/90, B01D 53/94, F01N 3/20

(54) **Vorrichtung zur Aufbereitung des Abgases einer Verbrennungskraftmaschine**
Device for treating the exhaust gas of a combustion engine
Dispositif de traitement de gaz d'échappement d'un moteur à combustion interne

(30) Priorität: 16.05.2006 DE 102006023145
(43) Veröffentlichungstag der Anmeldung: 28.09.2011
(62) Teilanmeldung aus: 07725275.7
(73) Patentinhaber: Continental Automotive GmbH, 30165 Hannover (DE)
(72) Erfinder: Brück, Rolf, 51429 Bergisch Gladbach (DE); Brugger, Marc, 53819 Neunkirchen-Seelscheid (DE); Härig, Thomas, 53819 Neunkirchen-Seelscheid (DE); Hirth, Peter, 51503 Rösrath (DE); Klein, Ulf, 53804 Much (DE)

(56) Entgegenhaltungen:
- EP-A- 1 092 466
- EP-A- 1 676 986
- EP-A- 1 748 162
- DE-A1- 4 038 054
- DE-A1- 10 206 028
- DE-A1-102004 042 225

## Beschreibung

Gegenstand der vorliegenden Erfindung ist eine Vorrichtung zur Aufbereitung des Abgases einer Verbrennungskraftmaschine, bei dem mittels einer selektiven katalytischen Reduktion der Gehalt an Stickoxiden im Abgas der Verbrennungskraftmaschine verringert wird.

Das Abgas von Verbrennungskraftmaschinen weist Stoffe auf, deren Emission in die Umwelt unerwünscht ist. Beispielsweise dürfen in vielen Ländern Stickoxide (NOₓ) nur bis zu einem gewissen Grenzwert im Abgas von Verbrennungskraftmaschinen enthalten sein. Neben innermotorischen Maßnahmen, mit denen durch eine Wahl eines geeigneten Betriebspunktes der Verbrennungskraftmaschine die Emission von Stickoxiden verringert werden kann, haben sich Nachbehandlungsmethoden etabliert, mit denen eine weitere Absenkung der Stickoxidemissionen möglich ist.

Eine Möglichkeit, die Stickoxidemission weiter zu reduzieren, ist die sogenannte selektive katalytische Reduktion (SCR, selective catalytic reduction). Hierbei erfolgt eine selektive Reduktion der Stickoxide zu molekularem Stickstoff (N₂) unter Einsatz eines selektiv wirkenden Reduktionsmittels. Ein mögliches Reduktionsmittel ist Ammoniak (NH₃). Ammoniak wird dabei oft nicht in Form von Ammoniak gelagert, vielmehr wird ein Ammoniakvorläufer bevorratet, der im Bedarfsfall in Ammoniak umgesetzt wird. Mögliche Ammoniakvorläufer sind beispielsweise Harnstoff ((NH₂)₂CO), Ammonium carbamat, Isocyansäure (HCNO), Cyanursäure und ähnliches.

Insbesondere Harnstoff hat sich als einfach zu bevorraten erwiesen. Bevorzugt wird Harnstoff in Form einer Harnstoff-Wasserlösung bevorratet. Harnstoff und insbesondere Harnstoff-Wasserlösung ist gesundheitlich unbedenklich, einfach zu distributieren und zu lagern. Unter dem Namen "AdBlue" wird eine solche Harnstoff-Wasserlösung bereits vertrieben.

Aus der DE 102 06 028 A1 ist ein Verfahren und eine Vorrichtung zur Erzeugung von Ammoniak und dessen Einspeisung in einen aus einem Verbrennungsprozess eines Motors, einer Gasturbine oder eines Brenners resultierenden Abgasstrom bekannt.

Aus der DE 40 38 054 A1 ist ein Verfahren und eine Vorrichtung zur Verdampfung von Harnstoff mittels eines Heizers bekannt. Dieser kann im Abgasstrom oder außerhalb der Abgasleitung angeordnet sein.

Aus der DE 199 13 462 A1 ist ein Verfahren bekannt, bei dem eine Harnstoff Wasserlösung stromaufwärts eines Hydrolysekatalysators in einen Teilstrom eines Abgases einer Verbrennungskraftmaschine eindosiert wird. Die Eindosierung erfolgt hierbei in Form von Tropfen. Durch Auftreffen der Tropfen auf den Hydrolysekatalysator erfolgt eine Hydro- und Thermolyse des Harnstoffs zu Ammoniak, der in einem stromabwärts gelegenen SCR-Katalysator als Reduktionsmittel zum Einsatz kommt. Das hier beschriebene Verfahren weist den Nachteil auf, dass der Hydrolysekatalysator durch die Verdampfung der Harnstoff-Wasserlösung abgekühlt wird. Insbesondere dann, wenn große Mengen Ammoniak benötigt werden, kann es so zumindest in Bereichen des Hydrolysekatalysators zu einer so starken Abkühlung kommen, dass hier die Hydrolysereaktion nicht mehr oder nicht mehr vollständig abläuft. Weiterhin kann es durch die aufgrund der Verdampfung der einzelnen Tropfen entstehende lokal stark diskontinuierliche Abkühlung des Hydrolysekatalysators zu einer Schädigung dieses Bauteils und insbesondere zu einer Ablösung einer katalytisch aktiven Beschichtung kommen.

Hiervon ausgehend liegt der vorliegenden Erfindung die Aufgabe zugrunde, eine Vorrichtung vorzuschlagen, mit der die aus dem Stand der Technik bekannten Nachteile zumindest gelindert werden können.

Diese Aufgabe wird gelöst durch eine Vorrichtung mit den Merkmalen des unabhängigen Anspruchs. Vorteilhafte Weiterbildungen sind Gegenstand der abhängigen Ansprüche.

Die erfindungsgemäße Vorrichtung zur Aufbereitung des Abgases einer Verbrennungskraftmaschine umfasst zumindest:
- einer Verdampfereinheit,
- einen Hydrolysekatalysator zur Hydrolyse von insbesondere Harnstoff zu Ammoniak und
- einen SCR-Katalysator zur selektiven katalytischen Reduktion von Stickoxiden (NOₓ).

Der Reduktionsmittellösungsverdampfer umfasst eine Verdampfereinheit zum Bereitstellen eines gasförmigen Stoffgemisches umfassend mindestens einen der folgenden Stoffe:
a) mindestens einen Reduktionsmittelvorläufer und
b) ein Reduktionsmittel.

Mittels der Verdampfereinheit ist eine wässrige Lösung umfassend mindestens einen Reduktionsmittelvorläufer verdampfbar. Der SCR-Katalysator ist in der Abgasleitung ausgebildet, während der Reduktionsmittellösungsverdampfer und der Hydrolysekatalysator außerhalb der Abgasleitung und mit dieser verbindbar ausgebildet ist. Vor dem SCR-Katalysator kann ein Partikelfilter ausgebildet sein, der im Betrieb ebenfalls von dem Reduktionsmittel enthaltenden Gasstrom aus dem Hydrolysekatalysator durchströmt werden kann.

Dies bedeutet, dass im Betrieb der SCR-Katalysator regelmäßig von Abgas durchströmt wird, während dies bei dem Hydrolysekatalysator und dem Reduktionsmittellösungsverdampfer normalerweise nicht der Fall ist. Letztere sind so ausgestaltet, dass sie so mit der Abgasleitung verbindbar sind, dass ein ein Reduktionsmittel umfassendes gasförmiges Stoffgemisch in die Abgasleitung einleitbar ist, aber höchstens geringe Mengen Abgas in den Hydrolysekatalysator und/oder den Reduktionsmittellösungsverdampfer eindringen können. Bevorzugt ist ein Reduktionsmittelvorläufer Harnstoff als Vorläufer des Reduktionsmittels Ammoniak.
In üblichen aus dem Stand der Technik bekannten Systemen wird auch der Hydrolysekatalysator zumindest von einem Teil des Abgases durchströmt. Dies bedingt, dass ein solcher Hydrolysekatalysator aufgrund des großen Massenstroms des Abgases ein gewisses Volumen, oftmals ein halbes Liter und mehr und eine gewisse für die katalysierte Reaktion zu nutzende Oberfläche aufweisen muss. Dieses Volumen und diese Oberfläche können bei einem Hydrolysekatalysator nach der vorliegenden Erfindung deutlich geringer ausfallen, da dieser lediglich so groß konzipiert werden muss, dass er die maximal benötigt Menge an Reduktionsmittelvorläufer in der verdampftem wässrigen Lösung umsetzen kann. Hierbei sind die Massenströme durch den Hydrolysekatalysator deutlich geringer.

In der Verdampfereinheit erfolgt im Betrieb eine Verdampfung der Harnstoff-Wasserlösung. Diese Harnstoff-Wasserlösung kann noch weitere Stoffe enthalten, die beispielsweise eine Herabsenkung des Gefrierpunktes dieser Lösung bewirken. Hierbei kann insbesondere Ameisensäure und/oder Amoniumformiat in der Lösung enthalten sein. Hierbei ist die Verdampfereinheit so ausgestaltet, dass im Betrieb zumindest ein Verdampfen der Harnstoffwasserlösung erfolgt. Je nach Einstellung der entsprechenden Temperatur und der entsprechenden Menge von Harnstoff-Wasserlösung, mit der die Verdampfereinheit beschickt wird, kann es neben dem reinen Verdampfen der Harnstoff-Wasserlösung auch bereits zu einer zumindest teilweisen Thermolyse des Harnstoffs zu Ammoniak kommen. Der Reduktionsmittellösungsverdampfer ist stromaufwärts des Hydrolysekatalysators und dieser stromaufwärts des SCR-Katalysators ausgebildet, so dass im Betrieb die verdampfte wässrige Lösung, die einen Reduktionsmittelvorläufer und/oder ein Reduktionsmittel umfasst, von dem Reduktionsmittellösungsverdampfer in den Hydrolysekatalysator strömt, wo eine zumindest teilweise Hydrolyse zu dem Reduktionsmittel erfolgt. Den Hydrolysekatalysator verlässt ein Gasgemisch, welches zumindest Reduktionsmittel umfasst. Dieses Gasgemisch wird in den SCR-Katalysator geleitet und dient dort als selektives Reduktionsmittel zur Reduktion von Stickoxiden (NO_{X}).

Die Verbrennungskraftmaschine kann mobil oder stationär sein. Insbesondere ist die Verbrennungskraftmaschine Teil eines Land-, Wasser- oder Luftfahrzeugs, bevorzugt eines Automobils wie insbesondere eines Personen- oder Lastkraftwagens. Der Hydrolysekatalysator und der SCR-Katalysator bezeichnen Katalysatorträgerkörper, die entsprechend katalytisch aktiviert sind. Insbesondere weisen diese Katalysatorträgerkörper Beschichtungen auf, die katalytisch aktiv sind oder die katalytisch aktive Substanzen enthalten. Besonders bevorzugt weisen die Katalysatorträgerkörper keramische Beschichtungen beispielsweise in Form eines Washcoats auf, in welchem die entsprechenden katalytisch aktiven Partikel verteilt sind. Insbesondere weist der Hydrolysekatalysator eine Beschichtung auf, die Titandioxid (Anatas) und/oder Eisenausgetauschte Zeolithe umfasst. Besonders bevorzugt weist der SCR-Katalysator eine Beschichtung auf, die mindestens eine der folgenden Komponenten umfasst: Titandioxid, Wolframtrioxid, Molybdentrioxid, Vanadiumpentoxid, Siliciumdioxid, Schwefeltrioxid, Zeolith. Als Katalysatorträgerkörper kommen insbesondere sogenannte Wabenkörper zum Einsatz, die Kanäle oder Hohlräume aufweisen, durch die ein Fluid strömen kann. Besonders bevorzugt ist ein Wabenkörper als Katalysatorträgerkörper, der aus keramischem und/oder metallischem Material aufgebaut ist. Eine Möglichkeit für einen Wabenkörper besteht in einem Wabenkörper, der aus dünnen Blechlagen besteht, wobei mindestens eine strukturierte und eine im Wesentlichen glatte Blechlage miteinander aufgewickelt oder gestapelt und mindestens einer dieser Stapel verwunden wird. Andere Katalysatorträgerkörper, beispielsweise Schüttgutkatalysatoren, Trägerkörper aus Wiremesh oder ähnliches sind möglich und erfindungsgemäß. Bevorzugt ist auch die Ausbildung insbesondere eines Hydrolysekatalysators in Form eines auf der Innenseite mit einer die Hydrolyse des Reduktionsmittelvorläufers zu Reduktionsmittel katalysierenden Beschichtung versehenen Rohres. Durch die Ausbildung einer getrennten Verdampfereinheit ist es in vorteilhafter Weise möglich, kontinuierlich eine definierte Abgabe von Reduktionsmittel zu gewährleisten, ohne dass im Falle von erhöhten Anforderungen an Reduktionsmittel eine ungleichmäßige und/oder unvollständige Hydrolyse des Ammoniakvorläufers zu Ammoniak erfolgt.

Gemäß einer vorteilhaften Ausgestaltung der erfindungsgemäßen Vorrichtung ist die Verdampfereinheit über eine Förderleitung mit einem Reservoir für die wässrige Lösung verbunden, wobei Förderleitung und Verdampfereinheit durch eine Verbindungseinheit miteinander verbunden sind.

Die Verbindungseinheit bildet die Schnittstelle zwischen der Förderleitung und der Verdampfereinheit. Diese Verbindungseinheit ist so ausgebildet, dass sie eine dichte Verbindung zwischen Förderleitung und Verdampfereinheit gewährleistet, um ein Austreten der wässrigen Lösung und des gasförmigen Stoffgemisches zu vermeiden. Weiterhin ist die Verbindungseinheit so ausgebildet, dass gleichzeitig eine Ablagerung von Stoffen im Inneren der Verbindungseinheit beispielsweise durch Ausfällen von Komponenten der entsprechenden wässrigen Lösung unterbleibt oder doch in so geringem Maße erfolgt, dass eine Durchströmung der Verbindungseinheit weiterhin möglich ist. Bevorzugt ist die Verbindungseinheit so ausgebildet, dass sie gekühlt werden kann. Beispielsweise ist sie mit einem entsprechenden Kühlelement verbunden. Allgemein ist eine Temperierung, also eine Kühlung oder Heizung der Verbindungseinheit möglich.

Gemäß einer weiteren vorteilhaften Ausgestaltung der erfindungsgemäßen Vorrichtung ist die Verbindungseinheit zumindest teilweise aus einem Material mit einer Wärmeleitfähigkeit von weniger als 10 W/m K (Watt pro Meter und Kelvin) ausgebildet.

Ein Material mit einer geringen Wärmeleitfähigkeit, die insbesondere unterhalb der von Metallen liegt, ermöglicht in vorteilhafter Weise die Ausbildung einer Verbindungseinheit, die eine hohe Temperatur in der Verdampfereinheit einerseits und andererseits eine niedrigere Temperatur in der Förderleitung zur Verdampfereinheit ermöglicht. So ist es insbesondere möglich, dass die Förderleitung eine Temperatur von bis zu 70°C, bis zu 80°C oder sogar bis zu 90°C aufweist, während die Verdampfereinheit eine Temperatur von mehr als 300°C, bevorzugt mehr als 350°C und bevorzugt sogar von mehr als 400°C aufweist. Besonders bevorzugt ist eine Temperatur von etwa 380°C. Hierbei ist durch die geringe Wärmeleitfähigkeit des Materials der Verbindungseinheit insbesondere gewährleistet, dass es nicht zu einer übermäßigen Aufheizung der Förderleitung kommt. Eine solche würde einerseits zu Wärmeverlusten in der Verdampfereinheit führen und könnte andererseits eine zumindest teilweise Verdampfung der wässrigen Lösung bereits in der Förderleitung bewirken, die oftmals unerwünscht ist. Dadurch, dass die wässrige Lösung in der Förderleitung vorliegt, kann eine besonders zuverlässige und genaue Regelung der zugeführten Menge der wässrigen Lösung zur Verdampfereinheit und damit der bereitgestellten Menge an Ammoniak erfolgen. Bevorzugt sind dabei Materialien, deren Wärmeleitfähigkeit nur 2 W/m K oder weniger, besonders bevorzugt nur 1 W/m K oder weniger, insbesondere 0,1 W/m K bis 0,4 W/m K, insbesondere etwa 0,25 W/m K oder weniger beträgt. Bevorzugt ist die Verbindungseinheit so aufgebaut, dass sich ihr Durchmesser auch bei pulsatilen Strömungen um weniger als 0,25% ändert. Bevorzugt ist die Verbindungseinheit so aufgebaut, dass sie einen durchströmbaren Durchmesser von 0,5 bis 6 mm im Falle einer im wesentlichen kreisförmigen Ausgestaltung des durchströmbaren Bereichs aufweist, besonders bevorzugt liegt der durchströmbare Durchmesser bei 3 bis 5 mm, insbesondere bei etwa 4 mm. Unabhängig von der Form des durchströmbaren Bereichs der Verbindungseinheit weist dieser bevorzugt einen Querschnitt von 0,2 bis 28 Quadratmillimeter auf. Bevorzugt umfasst die Verbindungseinheit mindestens ein Peltierelement zur Kühlung und/oder Beheizung der Verbindungseinheit. Die Verbindungseinheit ist insbesondere galvanisch von der Verdampfereinheit getrennt.

Gemäß einer weiteren vorteilhaften Ausgestaltung der erfindungsgemäßen Vorrichtung ist die Verbindungseinheit so aufgebaut, dass über eine Länge der Verbindungseinheit ein Temperaturgradient von 40 K/mm (Kelvin pro Millimeter) und mehr aufrechterhalten werden kann.

Dies wird insbesondere durch den Aufbau aus einem entsprechenden Werkstoff, einer Beschichtung aus einem entsprechenden Werkstoff und/oder eine entsprechende topologische Gestaltung der Verbindungseinheit erreicht Alternativ oder zusätzlich kann die Verbindungseinheit mit entsprechenden aktiven oder passiven Temperiermitteln ausgerüstet oder verbunden sein, die eine Aufrechterhaltung dieses Temperaturgradienten ermöglichen.

Ein Temperaturgradient von 40 K/mm und mehr ermöglicht in vorteilhafter Weise die Aufrechterhaltung einer hohen Temperatur von 350°C oder mehr in der Verdampfereinheit bei einer eher moderaten Temperatur von beispielsweise 70°C, 80°C oder 90°C in der Förderleitung. So kann einerseits eine gute und bevorzugt vollständige Verdampfung der wässrigen Lösung bei gleichzeitiger kleiner räumlicher Ausdehnung der Verdampfereinheit und guter Dosierbarkeit der wässrigen Lösung gewährleistet werden.

Die Ausbildung der Verbindungseinheit mit einer sehr geringen Wärmeleitfähigkeit und/oder einem sehr großen möglichen Temperaturgradienten ermöglicht in vorteilhafter Weise die Ausbildung eines sehr konstanten Temperaturniveaus innerhalb der Verdampfereinheit ohne eine wesentlich erniedrigte Temperatur in dem der Verbindungseinheit benachbarten Bereich. Ein solches konstantes Temperaturniveau der Verdampfereinheit ist vorteilhaft, da dadurch die Bildung von Ablagerungen innerhalb der Verdampfereinheit wirkungsvoll vermieden oder reduziert werden kann.

Gemäß einer weiteren vorteilhaften Ausgestaltung der erfindungsgemäßen Vorrichtung ist die Verbindungseinheit aus mindestens einem Werkstoff umfassend mindestens eines der folgenden Materialien aufgebaut:
a) ein keramischer Werkstoff und
b) Polytetrafluorethylen (PTFE).

Diese Werkstoffe haben in besonders vorteilhafter Weise einerseits eine geringe Wärmeleitfähigkeit beispielsweise von weniger als 10 W/m K und erlauben andererseits in vorteilhafter Weise die Ausbildung einer Verbindungseinheit mit Temperaturgradienten von 40 K/mm und mehr. Insbesondere beim Einsatz eines keramischen Werkstoffes ist es vorteilhaft, ein zusätzliches Dicht- und/oder Klebemittel einzusetzen, um die Dichtigkeit der Verbindungseinheit zu erhöhen.

Gemäß einer weiteren vorteilhaften Ausgestaltung der erfindungsgemäßen Vorrichtung weist der Hydrolysekatalysator eine Wärmekapazität von höchstens 60 J/K auf.

Hier wird unter der Wärmekapazität des Hydrolysekatalysators bevorzugt die Wärmekapazität ohne ein eventuell ausgebildetes Mantelrohr verstanden. Eine solche Wärmekapazität bewirkt, dass der Hydrolysekatalysator schnell aufheizbar und abkühlbar ist. Dies ermöglicht es in vorteilhafter Weise, den Hydrolysekatalysator als das oder eines von mehreren Regelelementen in einem Temperierregelkreislauf zu verwenden. Zudem hat sich herausgestellt, dass insbesondere beim Einsatz des Hydrolysekatalysators nicht im Abgasstrom, d. h. in einer Situation, bei der der Hydrolysekatalysator nicht vom Abgas der Verbrennungskraftmaschine durchströmt wird, eine andere Ausgestaltung des Hydrolysekatalysators als im Abgassystem, wobei der Hydrolysekatalysator auch von Abgas durchströmbar ist, möglich ist. Bevorzugt ist sogar ein Hydrolysekatalysator mit einer Wärmekapazität von höchstens 45 J/K, höchstens 30 J/K oder sogar von 25 J/K und weniger ausgebildet.

Der Hydrolysekatalysator umfasst bevorzugt einen metallischen Wabenkörper, der aus einem Stahl mit Werkstoffnummer 1.4725 nach deutschem Stahlschlüssel und/oder Aluminium aufgebaut ist. Unter einem Stahl mit Werkstoffnummer 1.4725 nach deutschem Stahlschlüssel wird insbesondere ein Stahl mit 14 bis 16 Gew.-% (Gewichts-%) Chrom, maximal 0,08 Gew.-% Eisen, maximal 0,6 Gew.-% Mangan, maximal 0,5 Gew.-% Silizium, 3,5 bis 5 Gew.-% Aluminium, maximal 0,3 Gew.-% Zirkonium, Rest Eisen verstanden, wobei der Stahl übliche Verunreinigungen, die sich insbesondere insgesamt zu höchstens 0,1 Gew.-% addieren, umfassen kann. Insbesondere kann der Werkstoff 1.4725 mit Aluminium beschichtet und/oder plattiert sein.

Gemäß einer weiteren vorteilhaften Ausgestaltung der erfindungsgemäßen Vorrichtung weist der Hydrolysekatalysator ein Volumen von weniger als 100 ml (Milliliter) auf.

Volumina des Hydrolysekatalysators von 5 bis 40 ml, bevorzugt von 10 bis 30 ml haben sich als besonders vorteilhaft erwiesen. Diese Volumina sind deutlich kleiner als die Volumina von Hydrolysekatalysatoren, die von Abgas durchströmt werden. Deren Volumen liegt regelmäßig bei 500 ml und mehr. Somit ist die erfindungsgemäße Vorrichtung kleiner und kostengünstiger im Vergleich zu aus dem Stand der Technik bekannten Systemen.

Gemäß einer weiteren vorteilhaften Ausgestaltung der erfindungsgemäßen Vorrichtung umfasst der Hydrolysekatalysator ein Mantelrohr.

Das Mantelrohr dient der Abdichtung des Hydrolysekatalysators. Bevorzugt ist eine Ausbildung des Hydrolysekatalysators, bei dem dieser aus einer auf die Innseite des Mantelrohrs aufgetragenen katalytisch aktiven Beschichtung besteht Weiterhin ist es vorteilhaft und bevorzugt, dass das Mantelrohr als Halterung einer üblichen Struktur dient, beispielsweise einer Wabenstruktur, die zumindest einen Teil des Innenraums des Mantelrohrs ausfüllt oder auch einer Struktur aus Wiremesh oder Metall- und/oder Keramikschaum.

Gemäß einer weiteren vorteilhaften Ausgestaltung der erfindungsgemäßen Vorrichtung ist in dem Mantelrohr mindestens eine zumindest teilweise strukturierte metallische Lage ausgebildet.

Hierbei kann der Hydrolysekatalysator eine übliche aus mindestens einer strukturierten, insbesondere gewellten, und gegebenenfalls mindestens einer weiteren im Wesentlichen glatten metallischen Lage aufgebaute Wabenstruktur umfassen. Alternativ ist es möglich, dass der Hydrolysekatalysator ein Mantelrohr und an dessen innerer Fläche eine strukturierte, insbesondere gewellte metallische Lage aufweist, die mindestens einmal den gesamten Umfang des Mantelrohrs umläuft, weite Teile des Querschnitts des Mantelrohrs aber nicht ausfüllt, so dass im Inneren der Lage ein frei durchströmbarer Querschnitt frei bleibt. Hierbei handelt es sich um eine so genannte "Hot Tube".

Bevorzugt weist der Hydrolysekatalysator von Wänden begrenzte Kanäle auf, wobei die Wände der Kanäle höchstens 80 µm (Mikrometer) dick sind. Bevorzugt sind hierbei Wanddicken von 60 µm und weniger oder 30 µm und weniger, insbesondere bei Ausbildung des Hydrolysekatalysators zumindest teilweise aus metallischen Lagen, die die Wände der Kanäle bilden. Diese Wanddicken haben sich als besonders vorteilhaft erwiesen, da diese es ermöglichen, einen Hydrolysekatalysator mit geringer Wärmekapazität auszubilden.

Gemäß einer weiteren vorteilhaften Ausgestaltung der erfindungsgemäßen Vorrichtung weist der Hydrolysekatalysator eine Zelldichte von weniger als 600 cpsi (Zellen pro Quadratzoll, cells per square inch) auf.

Im Vergleich zu üblichen Hydrolysekatalysatoren, die vom Abgas der Verbrennungskraftmaschine durchströmt werden, kann der nicht vom Abgas durchströmbare Hydrolysekatalysator mit geringeren Volumina und geringeren Oberflächen ausgebildet werden. Insbesondere kann hier eine geringere Zelldichte des Hydrolysekatalysators eingesetzt werden, da der Volumenstrom der durch den Hydrolysekatalysator strömt selbst bei Volllast geringer ist als der von Abgas. So können Hydrolysekatalysator mit relativ geringe Zelldichten von weniger als 600 cpsi, von weniger als 400 cpsi oder sogar von 300 oder 200 cpsi und weniger ausgebildet werden.

Gemäß einer weiteren vorteilhaften Ausgestaltung der erfindungsgemäßen Vorrichtung ist der Hydrolysekatalysator mechanisch mit der Abgasleitung verbunden, insbesondere an diese angeflanscht. Dies ermöglicht in vorteilhafter Weise eine stabile mechanische Lagerung der erfindungsgemäßen Vorrichtung.

Gemäß einer weiteren vorteilhaften Ausgestaltung der erfindungsgemäßen Vorrichtung ist der Hydrolysekatalysator thermisch von der Abgasleitung entkoppelt.

Eine thermische Entkopplung ist vorteilhaft, da in einer Kaltstartphase der Verbrennungskraftmaschine, in der die Abgasleitung noch relativ kühl ist, bei Aufheizung des Hydrolysekatalysators nicht die relativ große thermische Masse der Abgasleitung mit aufgeheizt werden muss. Nachdem die Abgasleitung ihre übliche Betriebstemperatur erreicht hat, die bis zu 800°C und mehr betragen kann und die größer als die übliche Betriebstemperatur des Hydrolysekatalysators von etwa 350 bis 450°C ist, wird so vermieden, dass eine Aufheizung des Hydrolysekatalysators durch die Abgasleitung erfolgt, die gegebenenfalls nicht gewollt ist und die Regelung der Temperatur des Hydrolysekatalysators erschwert.

Die Betriebstemperatur des Hydrolysekatalysators liegt insbesondere im Bereich von 350 bis 450°C, wobei die Beheizung des Hydrolysekatalysators bevorzugt durch den heißen, Reduktionsmittel und/oder Reduktionsmittelvorläufer enthaltenden Dampf, eine elektrische Zusatzheizung und/oder über die Abwärme der Verdampfungseinheit, die eine Betriebstemperatur von bis zu 450°C oder mehr aufweisen kann, erfolgt.

Gemäß einer weiteren vorteilhaften Ausgestaltung der erfindungsgemäßen Vorrichtung ist ein Stabförmiges Heizelement ausgebildet, mit welchem mindestens eines der folgenden Bauteile beheizbar ist:
a) der Hydrolysekatalysator und
b) zumindest Teile der Verdampfereinheit.

Gemäß einer weiteren vorteilhaften Ausgestaltung der erfindungsgemäßen Vorrichtung ist mindestens ein stabförmiges Heizelement ausgebildet, koaxial zu welchem mindestens eines der folgenden Elemente ausgebildet ist:
a) der Hydrolysekatalysator und
b) zumindest Teile der Verdampfereinheit.

Bevorzugt kann der Hydrolysekatalysator bei dieser Ausgestaltung als ringförmiger Wabenkörper ausgebildet werden, der mehrere Kanäle zwischen einem inneren, mit dem stabförmigen Heizelement verbundenen, und einem äußeren Mantelrohr enthält. Insbesondere kann die Verdampfereinheit eine Zugabeleitung enthalten, die insbesondere spiralförmig um das Heizelement gewickelt ist. Gegebenenfalls kann außerhalb der Anordnung ein weiteres Heizelement ausgebildet sein, so dass Teile der Verdampfereinheit und/oder der Hydrolysekatalysator zwischen zwei Heizelementen liegt. So kann eine besonders gleichmäßige Aufheizung erfolgen.

Bevorzugt weist das stabförmige Heizelement eine Mehrzahl von Heizzonen auf, deren Temperatur unabhängig voneinander geregelt werden kann. Insbesondere weist das stabförmige Heizelement mindestens zwei Zonen auf, um die herum jeweils in einer Zone der Hydrolysekatalysator und die Verdampfereinheit beziehungsweise die Zugabeleitung ausgebildet sind. Bevorzugt ist insbesondere die Zone der Verdampfereinheit beziehungsweise der Zugabeleitung weiter unterteilt, da hier unterschiedliche Prozesse ablaufen nämlich beispielsweise eine Erwärmung der Flüssigkeit, eine Verdampfung der Flüssigkeit und eine Überhitzung der Flüssigkeit. Bevorzugt ist folglich die Ausgestaltung des stabförmigen Heizelementes mit 5 oder 6 Zonen. Bevorzugt kann die Grenze zwischen diesen Zonen in Abhängigkeit von der Menge an zu verdampfender wässriger Lösung angepasst werden.

Gemäß einer weiteren vorteilhaften Ausgestaltung der erfindungsgemäßen Vorrichtung ist zumindest eines der folgenden Bauteile temperierbar:
a) zumindest Teile der Förderleitung;
b) der Hydrolysekatalysator;
c) zumindest Teile der Verdampfereinheit;
d) eine Dosierleitung zur Zugabe des entstehenden Reduktionsmittels zum Abgassystem und
e) eine Zugabeeinheit, mit der der Hydrolysekatalysator mit der Abgasleitung verbindbar ist.

Unter temperierbar wird in diesem Zusammenhang insbesondere verstanden, dass das oder die entsprechenden Bauteile beheizbar und/oder auch kühlbar sind. Mindestens eines der genannten Bauteile kann hierbei Teil einer Regelschleife sein, bevorzugt sind mehrere der genannten Bauteile. Insbesondere kann beim Regeln der Temperatur dieser Bauteile so vorgegangen werden, dass eines der Bauteile oder mehrere der Bauteile als eine Art Stellglied verwendet werden. Das heißt insbesondere, dass nur eines der Bauteil aktiv temperiert wird und sich durch die entsprechende Reaktionskinetik und durch die entsprechenden gerade vorliegenden fluiddynamischen Bedingungen die Temperatur der jeweiligen anderen Bauteile entsprechend einstellt.

Gemäß einer weiteren vorteilhaften Ausgestaltung der erfindungsgemäßen Vorrichtung sind Mittel zum Temperieren ausgebildet, die mindestens eines der folgenden Bauteile umfassen:
a) einen Heizdraht;
b) ein Peltier-Element;
c) einen Kühlkörper;
d) ein stabförmiges Heizelement;
e) ein Mittel zur Verbrennung eine Kraftstoffes; und
f) ein Bauteil aus einem Werkstoff mit einem positiven Temperaturkoeffizienten (PTC, positive temperature coefficient).

Insbesondere das Peltier-Element kann in vorteilhafter Weise sowohl zum Heizen als auch zum Kühlen des entsprechenden Bauteils eingesetzt werden. Der Kühlkörper weist in vorteilhafter Weise eine Form auf, die die Wärmeabstrahlung begünstigt. Der Kühlkörper ist bevorzugt aus einem Material mit einer hohen Wärmeleitfähigkeit wie insbesondere aus Aluminium oder einem anderen Metall oder einer Metalllegierung aufgebaut.

Unter einem Peltier-Element versteht man insbesondere ein elektrisches Bauelement, welches bei Stromdurchfluss eine Temperaturdifferenz erzeugt, die auf dem so genannten Peltier-Effekt beruht. Vorzugsweise umfasst ein Peltier-Element ein oder mehrere Elemente aus p- und n-dotiertem Halbleitermaterial, die abwechselnd über elektrisch leitendes Material miteinander verbunden sind. Das Vorzeichen der Temperaturdifferenz ist abhängig von der Richtung des Stromflusses, so dass sowohl eine Kühlung als auch eine Heizung mit einem Peltier-Element realisierbar ist.

Unter einem Brenner versteht man hier insbesondere eine Vorrichtung zur Verbrennung eines Kraftstoffes, insbesondere umfassend Kohlenwasserstoffe und/oder Wasserstoff. Auch eine flammlose Verbrennung ist in vorteilhafter Weise möglich. Unter einem Werkstoff mit einem positiven Temperaturkoeffizienten, einem sogenannten PTC-Widerstand, werden insbesondere stromleitende Materialien verstanden, deren elektrischer Widerstand mit der Temperatur steigt. Diese werden insbesondere in Form sogenannter selbstregelnder Heizelemente eingesetzt und sind insbesondere aus einem keramischen Material, insbesondere einer Bariumtitanatkeramik ausgebildet Alternativ können auch PTC-Widerstände aus einem Polymermaterial, insbesondere aus einem mit Rußpartikeln dotierten Polymermaterial eingesetzt werden.

Gemäß einer weiteren vorteilhaften Ausgestaltung der erfindungsgemäßen Vorrichtung weist mindestens eines der folgenden Bauteile eine die Hydrolyse von Harnstoff katalysierende Beschichtung auf:
a) zumindest Teile der Verbindungseinheit;
b) zumindest Teile einer Zugabeleitung zur Zugabe des gasförmigen Stoffgemisches zum Hydrolysekatalysator;
c) zumindest Teile der Verdampfereinheit;
d) zumindest Teile einer Dosierleitung zur Zugabe des entstehenden Reduktionsmittel zum Abgassystem und
e) zumindest Teile einer Zugabeleitung, mit der der Hydrolysekatalysator mit der Abgasleitung verbindbar ist.

Durch die Ausbildung einer die Hydrolyse von Harnstoff katalysierenden Beschichtung, die insbesondere wie oben bereits angegeben ausgebildet sein kann, wird in vorteilhafter Weise neben dem Hydrolysekatalysator als solchem bereits eine Hydrolyse in einem der angegebenen Bauteile katalysiert. Dies erhöht die Umsetzungseffektivität und erlaubt es, den Hydrolysekatalysator entsprechend kleinvolumiger mit einer kleineren katalytisch aktiven Oberfläche auszubilden. Die Ausbildung einer die Hydrolyse von Ammoniak katalysierenden Beschichtung in der Dosierleitung dient insbesondere zur Gewährleistung der möglichst vollständigen Hydrolyse von Ammoniak und verhindert insbesondere auch nennenswerte Anteile einer Rückreaktion hin zu Harnstoff oder einem anderen Ammoniakvorläufer. Unter einer die Hydrolyse von Harnstoff katalysierenden Beschichtung wird insbesondere verstanden, dass eine Zugabeleitung zur Zugabe der wässrigen Lösung zu dem Hydrolysekatalysator und/oder eine Verdampferkammer zur Verdampfung der wässrigen Lösung zumindest in Teilen eine die Hydrolyse von Harnstoff katalysierende Beschichtung aufweisen. So können diese Bauteile bereits eine teilweise Hydrolyse des Reduktionsmittelvorläufers zum Reduktionsmittel bewirken und so die Effektivität der Hydrolyse verbessern. Zudem kann so grundsätzlich der Hydrolysekatalysator kleinvolumiger beziehungsweise mit einer kleineren katalytisch aktiven Oberfläche ausgebildet werden als ohne die Ausbildung einer entsprechenden Beschichtung auf mindestens einem der genannten Bauteile.

Erfindungsgemäß ist eine Ausgestaltung der Vorrichtung, bei der Verdampfereinheit und Hydrolysekatalysator nicht von Abgas durchströmbar sind, sondern lediglich der SCR-Katalysator von Abgas durchströmbar ist. Dies ergibt deutlich geringere Durchflussraten durch die Verdampfereinheit und den Hydrolysekatalysator, was in vorteilhafter Weise bei einer Auslegung insbesondere des Hydrolysekatalysators berücksichtigt werden kann, so dass dieser kleiner und mit einer geringeren Zelldichte ausgebildet werden kann als Hydrolysekatalysatoren, die von Abgas durchströmt werden. Dies senkt die Kosten bei der Herstellung der erfindungsgemäßen Vorrichtung im Vergleich zu aus dem Stand der Technik bekannten Vorrichtungen.

Gemäß einer weiteren vorteilhaften Ausgestaltung der erfindungsgemäßen Vorrichtung ist eine Zugabeeinheit ausgebildet, mittels der der Hydrolysekatalysator in strömungstechnische Verbindung mit einer Abgasleitung der Verbrennungskraftmaschine bringbar ist.

Über die Zugabeeinheit erfolgt dann die Zudosierung des Reduktionsmittelstoffgemisches umfassend mindestens ein Reduktionsmittel zur Abgasleitung. Insbesondere kann die Zugabeeinheit die Dosierleitung umfassen, kann jedoch weitere Bauteile aufweisen. Insbesondere kann es sich hierbei um ein passives Vermischungsmittel handeln, mit welchem die einbringbaren Stoffe mit dem Abgas mischbar sind.

Unter einem passiven Vermischungsmittel wird insbesondere verstanden, dass kein aktiv bewegtes Vermischungsmittel ausgebildet ist, sondern dass lediglich durch die Ausbildung eines statischen Vermischungsmittels gemeinsam mit den Charakteristika der Abgasströmung und der Strömung der einbringbaren Stoffe eine Vermischung der Stoffe mit dem Abgas erfolgen kann.

Insbesondere ist es bevorzugt, dass das Vermischungsmittel mindestens eines der folgenden Bauteile umfasst:
a) ein Leitblech und
b) einen Wabenkörper, der so ausgestaltet ist, dass das Abgas diesen zumindest zum Teil in einem Winkel zur Hauptströmungsrichtung des Abgases durchströmen kann.

Das Leitblech kann dabei insbesondere in die Abgasleitung hineinragen. Das Leitblech kann insbesondere zumindest in Teilbereichen perforiert sein und/oder zumindest in Teilbereichen eine Krümmung aufweisen. Das Leitblech kann in einem Winkel zur Längsrichtung-der-Abgasleitung an dieser Stelle in die Abgasleitung hineinragen.

Der Wabenkörper weist insbesondere Kanäle auf, deren Wände Perforationen aufweisen. Durch diese Perforationen, die ggf. durch entsprechend ausgebildete Leitstrukturen ergänzt werden können, kann es zu einer Strömung in einem Winkel zur Kanallängsachse kommen. Dieser Wabenkörper kann bevorzugt auch konisch ausgebildet sein. Insbesondere mündet die Dosierleitung im Inneren einer entsprechenden Aussparung des Wabenkörpers, so dass direkt im Wabenkörper die Zudosierung der entsprechenden Stoffe erfolgen kann.

Gemäß einer weiteren vorteilhaften Ausgestaltung der erfindungsgemäßen Vorrichtung weist der Wabenkörper für ein Fluid durchströmbare Kanäle und Durchbrechungen auf, die benachbarte Kanäle miteinander verbinden. Die Durchbrechungen können hierbei kleiner oder größer als die üblichen Abmessungen eines Kanals sein.

Gemäß einer weiteren vorteilhaften Ausgestaltung der erfindungsgemäßen Vorrichtung ist mindestens eines der folgenden Bauteile:
a) die Zugabeeinheit und b) die Abgasleitung so ausgebildet, dass im Betrieb der Mündungsbereich der Zugabeeinheit in die Abgasleitung eine strömungstechnische Beruhigungs- oder Totzone bildet.

Dies führt in besonders vorteilhafter Weise dazu, dass im Betrieb der Druck in der Abgasleitung niedriger ist als in der Zugabeeinheit bzw. in der Dosierleitung, so dass hier im Wesentlichen kein Abgas in Richtung des Hydrolysekatalysators strömt. Unter einer Beruhigungs- oder Totzone wird ein Bereich mit Unterdruck bezogen auf den Druck in der Zugabeeinheit und/oder Dosierleitung verstanden. Insbesondere kann dies in Verbindung mit einem Vermischungsmittel erreicht werden, welches direkt im Mündungsbereich eine Beruhigungs- oder Totzone schafft und stromabwärts dieses Mündungsbereichs eine Vermischung begünstigt.

Gemäß einer weiteren vorteilhaften Ausgestaltung der erfindungsgemäßen Vorrichtung ist stromabwärts des Hydrolysekatalysators eine thermische Isolierung ausgebildet. Bevorzugt ist die thermische Isolierung unmittelbar anschließend an den Hydrolysekatalysator ausgebildet.

Die thermische Isolierung verhindert einen thermischen Kontakt mit der Abgasleitung, so dass einerseits verhindert werden kann, dass der Hydrolysekat Wärme an die Abgasleitung abgibt und so auskühlt und dass andererseits die Abgasleitung Wärme an den Hydrolysekat abgibt. Im Extremfall könnte dies dazu führen, dass eine thermische Regelung nicht mehr erfolgen kann, da bei Beheizen des Hydrolysekatalysators immer auch die Abgasleitung mitgeheizt wird.

Gemäß einer weiteren vorteilhaften Ausgestaltung der erfindungsgemäßen Vorrichtung umfasst mindestens eines der folgenden Bauteile mindestens einen Temperatursensor:
a) die Zugabeeinheit;
b) der Hydrolysekatalysator;
c) der SCR-Katalysator;
d) die Verdampfereinheit;
e) die Zugabeleitung;
f) die Verdampferkammer und
g) eine Dosierleitung zur Zugabe des entstehenden Reduktionsmittels zur Abgasleitung.

Mit diesem mindestens einen Temperatursensor kann die Temperatur des entsprechenden Bauteils erfasst werden. Der Temperatursensor umfasst bevorzugt einen Thermowiderstand. Bevorzugt ist der Temperatursensor mit einer Stormversorgung verbindbar. Hierdurch kann das Bauteil beheizt werden. Dies kann beispielsweise in einem Notfallbetrieb nötig sein, falls sich Stoffe in dem Bauteil niedergeschlagen haben und diese verstopfen oder drohen diese zu verstopfen. Hierbei kann es sich neben Harnstoff und ähnlichem auch um Ruß handeln, welcher mit Abgas beispielsweise durch Diffusion in die Zugabeeinheit gelangt ist.

Gemäß einer weiteren vorteilhaften Ausgestaltung der erfindungsgemäßen Vorrichtung ist ein Fördermittel ausgebildet, mittels welchem die wässrige Lösung aus einem Reservoir zu der Verdampfereinheit förderbar ist. Bevorzugt umfasst das Fördermittel mindestens eine Pumpe.

Durch das Fördermittel kann vor der Verdampfereinheit ein konstanter Druck der wässrigen Lösung aufgebaut werden, wobei eine Dosierung in die Verdampfereinheit durch ein Ventil erfolgt. In einer anderen bevorzugten Ausgestaltung ist die Pumpe eine Dosierpumpe, wobei die Dosierung durch eine entsprechende Ansteuerung der Pumpe erfolgt. Unter einer Dosierpumpe wird insbesondere eine Pumpe verstanden, die die Förderung von definierten Volumina pro Zeiteinheit oder pro Pumpenhub erlaubt.

Gemäß einer weiteren vorteilhaften Ausgestaltung der erfindungsgemäßen Vorrichtung kann die Pumpe einen Förderdruck aufbauen, der größer als der höchstmögliche Abgasdruck im Betrieb der Verbrennungskraftmaschine an der Zugabeeinheit und/oder der Dosierleitung ist.

Hierdurch kann im Betrieb verhindert werden, dass Abgas in die Verdampfereinheit und/oder den Hydrolysekatalysator eindringt. Bevorzugt wird eine Pumpe eingesetzt, die eine Förderleistung von bis zu 150 ml/min, bevorzugt von bis zu 30 ml/min oder von bis zu 10 ml/min aufweist. Bevorzugt wird eine Pumpe eingesetzt, deren Förderleistung pro Sekunde um 0,75 bis 2,5 ml/s änderbar ist, insbesondere um diese Werte gesteigert kann.

Bevorzugt wird als Fördermittel eine Pumpe eingesetzt, die einen Förderdruck von bis zu 6 bar absolut, bevorzugt bis zu 2 bar absolut aufbauen kann. Bevorzugt schwankt der von der Pumpe aufrechterhaltene Volumenstrom um höchstens 5 % um einen vorgebbaren Nennstrom. Bevorzugt ist die Pumpe so ausgestaltet, dass auch eine Rückförderung hin zum Reservoir erfolgen kann, insbesondere mit einem Volumenstrom, der der Förderleistung entspricht.

Gemäß einem weiteren Aspekt wird auch ein Verfahren zur Aufbereitung des Abgases einer Verbrennungskraftmaschine vorgeschlagenen, welches die folgenden Schritte umfasst:
a) Bereitstellen eines mindestens einen der folgenden Stoffe:
   a1) Reduktionsmittel und
   a2) mindestens einen Reduktionsmittelvorläufer umfassenden gasförmigen Stoffgemisches;
b) Hydrolyse des Reduktionsmittelvorläufers, wobei ein Reduktionsmittelstoffgemisch erhalten wird;
c) Beaufschlagen eines SCR-Katalysators mit dem Reduktionsmittelstoffgemisch und dem Abgas zur zumindest teilweisen selektiven katalytischen Reduktion von im Abgas umfassten Stickoxiden (NOₓ),
wobei nach Schritt b) eine Mischung des Reduktionsmittelstoffgemisches zumindest mit Teilen des Abgases erfolgt.

Das Verfahren kann insbesondere mittels der erfindungsgemäßen Vorrichtung durchgeführt werden. Das Verfahren erlaubt in besonders vorteilhafter Weise die Bereitstellung von Ammoniak als Reduktionsmittel zum Einsatz in der selektiven katalytischen Reduktion von Stickoxiden, wobei ein sehr dynamisches Verfahren zur Bereitstellung des Ammoniaks vorgeschlagen wird, so dass auch auf sehr stark ansteigende und somit sehr dynamische Anforderungen von Ammoniak durch hohe Stickoxidkonzentrationen im Abgas schnell reagiert werden kann. Die Mischung des Reduktionsmittelstoffgemisches mit dem Abgas nach Schritt b) bedeutet insbesondere, dass eine Verdampfung einer wässrigen Lösung umfassend mindestens einen Reduktionsmittelvorläufer außerhalb des Abgasstroms erfolgt und erst nach Hydrolyse des Reduktionsmittelvorläufers zu dem Reduktionsmittel erfolgt eine Zugabe zum Abgas der Verbrennungskraftmaschine. Bevorzugt ist eine Variante des Verfahrens, bei der eine Mischung des Reduktionsmittelstoffgemisches mit dem gesamten Abgas der Verbrennungskraftmaschine erfolgt. Bevorzugt ist hierbei das Reduktionsmittel Ammoniak und ein Reduktionsmittel Harnstoff.

Gemäß einer vorteilhaften Weiterbildung des Verfahrens umfasst Schritt a) eine Verdampfung einer wässrigen Lösung umfassend mindestens einen Reduktionsmittelvorläufer in einer Verdampfereinheit.

Bevorzugt ist der Reduktionsmittelvorläufer Harnstoff. Neben Harnstoff kann die Lösung weitere Stoffe enthalten, beispielsweise Stoffe, die den Gefrierpunkt der Lösung herabsetzen. Hierzu zählt beispielsweise Amoniumformiat und/oder Ameisensäure. Eine entsprechende Lösung wird unter dem Markennamen "Denoxium" vertrieben: Eine weitere Möglichkeit ist der Einsatz einer Lösung, die unter dem Markennamen "AdBlue" vertrieben wird.

Gemäß einer weiteren vorteilhaften Ausgestaltung des Verfahrens erfolgt Schritt b) zumindest teilweise in einem Hydrolysekatalysator. Hierbei umfasst der Hydrolysekatalysator insbesondere einen Katalysatorträgerkörper, der mit einer entsprechenden die Hydrolyse von Ammoniak katalysierenden Beschichtung versehen ist.

Gemäß einer weiteren vorteilhaften Ausgestaltung des Verfahrens wird die Temperatur mindestens eines der folgenden Bauteile geregelt:
a) zumindest von Teilen der Verdampfereinheit;
b) des Hydrolysekatalysators;
c) einer Förderleitung zum Fördern der wässrigen Lösung;
d) eine Zugabeleitung zur Zugabe des gasförmigen Stoffgemisches zum Hydrolysekatalysator;
e) eine Dosierleitung zur Zugabe des entstehenden Reduktionsmittels zum Abgassystem und
eine Zugabeeinheit, mittels der Hydrolysekatalysator in strömungstechnische Verbindung mit einer Abgasleitung der Verbrennungskraftmaschine bringbar ist.

Die Regelung der Temperatur mindestens eines der genannten Bauteile erlaubt in vorteilhafter Weise eine genaue Steuerung der Reaktionskinetik in Bezug auf die entstehenden Produkte und die Menge der entstehenden Produkte. So ist es möglich, genau an den momentanen oder einen für einen zukünftigen Zeitpunkt prognostizierten Stickoxidgehalt im Abgas abgestimmte Mengen von Ammoniak dem Abgas zuzugeben, um so eine möglichst vollständige Umsetzung der Stickoxide im Abgas der Verbrennungskraftmaschine zu erreichen.

Gemäß einer weiteren vorteilhaften Ausgestaltung des Verfahrens wird mindestens eines der folgenden Bauteile temperiert:
a) zumindest von Teilen der Verdampfereinheit;
b) des Hydrolysekatalysators;
c) einer Förderleitung zum Fördern der wässrigen Lösung zu dem Verdampfereinheit;
d) eine Zugabeleitung zur Zugabe des gasformigen Stoffgemisches zum Hydrolysekatalysator,
e) eine Dosierleitung zur Zugabe des entstehenden Reduktionsmittels zum Abgassystem und
f) eine Zugabeeinheit mittels der der Hydrolysekatalysator in strömungstechnischer Verbindung mit einer Abgasleitung der - Verbrennungskraftmaschine bringbar ist.

Durch die vielfältigen reaktionskinetischen Vorgänge, die bei den erfindungsgemäßen Reaktionen stattfinden, kann es ausreichen, nur Teile eines oder mehrerer der oben bezeichneten Bauteile oder auch eines oder mehrere der oben bezeichneten Bauteile insgesamt zu temperieren. Unter einer Temperierung wird hierbei insbesondere eine Beheizung oder Kühlung des Bauteils verstanden. Hierbei kann es ausreichen, eines oder mehrere der oben bezeichneten Bauteile als eine Art Stellglied zu verwenden, welches so temperiert wird, dass sich durch die Reaktionskinetik die Temperatur der anderen Bauteile entsprechend ändert.

Gemäß einer weiteren vorteilhaften Ausgestaltung des Verfahrens wird die wässrige Lösung durch eine Förderleitung zum Reduktionsmittellösungsverdampfer gefördert.

Insbesondere erfolgt diese Förderung mittels einer Pumpe und insbesondere aus einem Reservoir.

In diesem Zusammenhang ist es besonders vorteilhaft, wenn die wässrige Lösung durch die Förderleitung rückförderbar ist.

Dies kann insbesondere dann von Vorteil sein, wenn das entsprechende System abgeschaltet werden muss oder abgeschaltet wird. Bei einem Automobil kann dies beispielsweise dann der Fall sein, wenn der Fahrer die Zündung des Fahrzeugs abschaltet. In diesem Falle würde der restliche in der Dosierleitung vorhandene Ammoniak ungehindert in das Abgassystem und dann sukzessive auch an die Umwelt austreten. Dies ist oftmals unerwünscht, so dass durch eine Rückforderung aus der Förderleitung und gegebenenfalls auch aus der Zugabeleitung die Emission von Ammoniak oder auch von Ammoniakvorläufern in die Umwelt wesentlich reduziert und insbesondere unterbunden werden kann.

Gemäß einer weiteren vorteilhaften Ausgestaltung des Verfahrens werden bis zu 2,5 ml der wässrigen Lösung binnen einer Sekunde verdampft.

Bevorzugt ist die Verdampfereinheit so ausgebildet, dass kontinuierlich bis zu 30 ml/min (Milliliter pro Minute) der wässrigen Lösung verdampfbar sind. Durch eine solche Verfahrensführung ist eine dynamische Bereitstellung von Reduktionsmittel möglich, mit der auch Konzentrationsspitzen der Konzentration von Stickoxiden umsetzbar sind.

Gemäß einer weiteren vorteilhaften Ausgestaltung des Verfahrens wird vor Beginn einer Temperierungsmaßnahme die Temperatur an mindestens einem der folgenden Bauteile bestimmt:
a) dem Hydrolysekatalysator;
b) der Verdampfereinheit;
c) einer Dosierleitung zur Zugabe des entstehenden Reduktionsmittels zur Abgasleitung; und
d) einer Zugabeeinheit, mittels der der Hydrolysekatalysator mit der Abgasleitung verbunden werden kann
und mit mindestens einer weiteren Temperatur eines anderen Bauteils abgeglichen wird.

Bevorzugt handelt es sich bei dem anderen Bauteil um ein Bauteil, welches im Wesentlichen die Umgebungstemperatur aufweist, beispielsweise einen Außentemperaturfühler eines Kraftfahrzeugs, eines Kühlwasserthermometers etc. Bevorzugt erfolgt hierbei der Abgleich bevor die Verdampfung der wässrigen Lösung initiiert wird. Unter Abgleich wird hier insbesondere verstanden, dass ein Vergleich der beiden Temperaturen erfolgt, wobei weitere Faktoren berücksichtigt werden können.

Besonders bevorzugt ist hierbei, wenn eine Verdampfung der wässrigen Lösung nur durchgeführt wird, wenn der Temperaturabgleich ergibt, dass sich die bestimmte Temperatur und die Temperatur des anderen Bauteils höchstens um einen vorgebbaren Differenzwert unterscheiden.

Bei Vorgabe des Differenzwertes wird insbesondere berücksichtigt, ob das System in einer vorgebbaren Zeitspanne in Betrieb war und wann das System deaktiviert wurde. Weiterhin kann eine Zeitspanne vorgegeben werden, in dem diese Diagnosefunktionen nicht stattfinden, wenn innerhalb der Zeitspanne das System in Betrieb war.

Die für die erfindungsgemäße Vorrichtung offenbarten Details und Vorteile lassen sich auf das Verfahren übertragen und anwenden. Die für das Verfahren offenbarten Details und Vorteile lassen sich auf die erfindungsgemäße Vorrichtung übertragen und anwenden.

Alternativ kann die erfindungsgemäße Vorrichtung und das Verfahren auch so ausgestaltet sein, dass Hydrolysekatalysator und Reduktionsmittellösungsverdampfer im Betrieb von einem Teilstrom Abgas durchströmt werden. Sämtliche hier offenbarte vorteilhaften Weiterbildungen, bei denen Hydrolysekatalysator und Reduktionsmittellösungsverdampfer normalerweise im Betrieb nicht vom Abgas durchströmt werden, lassen sich auch auf eine Alternative übertragen, bei der Hydrolysekatalysator und Reduktionsmittellösungsverdampfer im Betrieb von einem Teil des Abgasstroms durchströmt werden.

Im Folgenden wird die Erfindung anhand der beigefügten Figuren näher erläutert, ohne dass die Erfindung auf die dort gezeigten Ausführungsbeispiele beschränkt wäre. Es zeigen schematisch:
- Fig. 1: eine Vorrichtung zum Bereitstellen eines gasförmigen Stoffgemisches in einer ersten Ausführungsform als perspektivische Ansicht;
- Fig. 2: die erste Ausführungsform der Vorrichtung zum Bereitstellen eines gasförmigen Stoffgemisches in einer Schnittansicht;
- Fig. 3: eine Förderleitung zur Förderung der wässrigen Lösung von einem Reservoir zur Zugabeleitung;
- Fig. 4: eine Ansicht einer Vorrichtung zur selektiven katalytischen Reduktion von Stickoxid im Abgas einer Verbrennungskraftmaschine;
- Fig. 5: schematisch ein zweites Ausführungsbeispiel einer Verdampfereinheit;
- Fig. 6: eine Vorrichtung zum Bereitstellen eines Reduktionsmittels;
- Fig. 7: schematisch eine alternative Ausführungsform der Verdampfereinheit im Querschnitt;
- Fig. 8: ein Detail einer Mündung einer Dosierleitung in eine Abgasleitung;
- Fig. 9: ein Ausführungsbeispiel einer Vorrichtung zur Bereitstellung eines gasförmigen Stoffgemisches im Schnitt;
- Fig. 10: schematisch eine Vorrichtung zur Bereitstellung eines gasförmigen Stoffgemisches;
- Fig. 11: ein Beispiel einer möglichen Zugabeeinheit des Reduktionsmittelstoffgemisches zum Abgas;
- Fig. 12: eine weitere Möglichkeit einer Zugabeeinheit zur Zugabe des Reduktionsmittelstoffgemisches zum Abgas;
- Fig. 13: ein Ausführungsbeispiel einer Vorrichtung zum Aufbereiten des Abgases einer Verbrennungskraftmaschine;
- Fig. 14: ein Mittel zum Abscheiden von Tropfen;
- Fig. 15 bis 18: Ausführungsbeispiele von Verdampfereinheiten;
- Fig. 19 und 20: ein weiteres Ausführungsbeispiel einer Vorrichtung zur Bereitstellung eines gasförmigen Stoffgemisches;
- Fig. 21: ein weiteres Ausführungsbeispiel einer Vorrichtung zur Aufbereitung von Abgas;
- Fig. 22: ein Detail eines Mündungsbereichs einer Zugabeeinheit in die Abgasleitung und
- Figs. 23 und 24: Beispiele für Wabenkörper als Katalysatorträgerkörper.

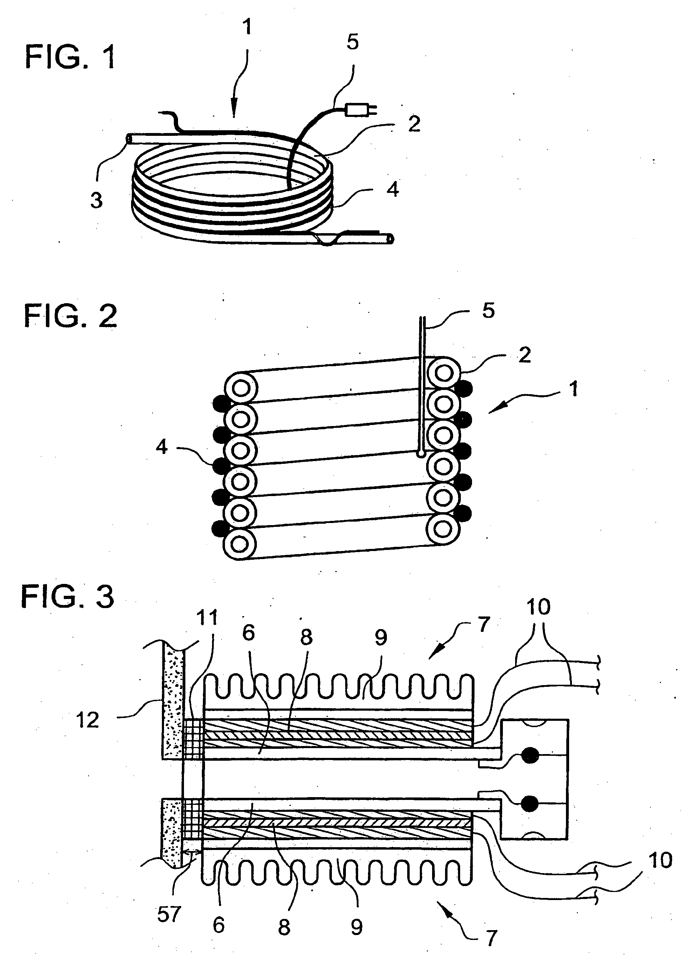

Fig. 1 zeigt schematisch eine Vorrichtung 1 zum Bereitstellen eines gasförmigen Stoffgemisches umfassend mindestens einen der folgenden Stoffe:
a) mindestens ein Reduktionsmittel
b) mindestens einen Reduktionsmittelvorläufer.

Hierbei handelt es sich insbesondere um das Reduktionsmittel Ammoniak und den Reduktionsmittelvorläufer Harnstoff. Die Vorrichtung 1 umfasst eine Zugabeleitung 2 mit Abgabeöffnung 3. Weiterhin sind Mittel 4 zur Aufheizung der Zugabeleitung 2 ausgebildet, mit denen die Zugabeleitung 2 über eine erste kritische Temperatur aufheizbar ist, die größer als die Siedetemperatur von Wasser ist. Die Vorrichtung 1 umfasst weiterhin ein hier noch nicht gezeigtes Reservoir, das mit der Zugabeleitung 2 in strömungstechnische Verbindung bringbar ist. D. h. insbesondere, dass ein im Reservoir gespeichertes Fluid wie beispielsweise eine wässrige Lösung umfassend mindestens einen Reduktionsmittelvorläufer im Betrieb durch die Zugabeleitung 2 hin zur Abgabeöffnung 3 strömen kann. Durch diese Vorrichtung 1 kann ein gasförmiges Stoffgemisch bereitgestellt werden, welches mindestens ein Reduktionsmittel und/oder mindestens einen Reduktionsmittelvorläufer enthält.

Im vorliegenden Ausführungsbeispiel sind die Mittel 4 zur Aufheizung der Zugabeleitung 2 gemeinsam mit dieser spiralförmig aufgewickelt. Dadurch wird ein durch die Zugabeleitung 2 strömendes Fluid aufgeheizt und schlussendlich verdampft. Hierdurch wird durch die Abgabeöffnung 3 ein gasförmiges Stoffgemisch abgegeben, welches zumindest mindestens einen Reduktionsmittelvorläufer enthält. Je nach Wahl der Temperatur der Mittel 4 zur Aufheizung der Zugabeleitung 2 kann sogar bereits eine zumindest teilweise Thermolyse des Reduktionsmittelvorläufers in der Zugabeleitung 2 erfolgen, so dass das durch die Abgabeöffnung abgegebene gasförmige Stoffgemisch neben einem Reduktionsmittelvorläufer wie beispielsweise Harnstoff auch bereits Reduktionsmittel wie beispielsweise Ammoniak enthält.

Weiterhin umfasst die Vorrichtung 1 zum Bereitstellen eines gasförmigen Stoffgemisches auch einen Messfühler 5, mit dem die Temperatur an mindestens einer Stelle der Zugabeleitung 2 gemessen werden kann. Bei dem Messfühler 5 kann es sich beispielsweise um ein übliches Thermoelement oder einen üblichen Thermowiderstand handeln. Die Vorrichtung 1 und/oder die einzelnen Komponenten, die einen elektrischen Anschluss benötigen, umfassen bevorzugt einen Kabelschwanz zur Realisierung der elektrischen Anschlüsse. Unter einem Kabelschwanz wird insbesondere eine Kabelverbindung verstanden, die mindestens einen halben Meter, bevorzugt mindestens einen Meter lang ist. Dies ermöglicht die Ausbildung von Steckkontakten in Bereichen, die insbesondere in Automobilen nur geringen Umwelteinflüssen wie Spritzwasser, Steinschlag oder ähnlichem ausgesetzt sind.

Fig. 2 zeigt die Vorrichtung 1 aus Fig. 1 im Schnitt. Deutlich zu erkennen ist die Zugabeleitung 2, durch die im Betrieb die wässrige Lösung umfassend mindestens einen Reduktionsmittelvorläufer strömen kann sowie die Mittel 4 zur Aufheizung der Zugabeleitung 2. Die Zugabeleitung 2 kann einen konstanten Querschnitt aufweisen, dieser kann jedoch auch wie im vorliegenden Beispiel variabel sein. Der durchströmbare Querschnitt der Zugabeleitung 2 liegt hierbei allerdings bevorzugt zwischen 0,75 mm² und 20 mm², bevorzugt liegt der durchströmbare Querschnitt im Bereich von etwa 3 mm². Diese durchströmbaren Querschnittehaben sich als vorteilhaft erwiesen, da einerseits eine schnelle und im Wesentlichen vollständige Verdampfung der wässrigen Lösung bei einem solchen Querschnitt möglich ist und andererseits der Querschnitt so groß ist, dass die Bildung von Ablagerungen im Inneren der Zugabeleitung 2 im Wesentlichen vermieden wird. Fig. 2 zeigt auch den Messfühler 5 zur Bestimmung der Temperatur der Zugabeleitung 2.

Hierbei werden die Mittel 4 zur Aufheizung der Zugabeleitung 2 so betrieben, dass im Betrieb die Temperatur über die Länge der Zugabeleitung 2 höchstens 5°C oberhalb und unterhalb einer mittleren Temperatur liegt. Die mittlere Temperatur entspricht dabei im Wesentlichen der ersten kritischen Temperatur. Die Zugabeleitung 2 ist insbesondere aus einer Kupferlegierung ausgebildet.

Fig. 3 zeigt schematisch die Förderleitung 6, über die die Zugabeleitung 2 im Betrieb mit einem hier noch nicht gezeigten Reservoir verbindbar ist. Die Förderleitung 6 weist Mittel 7 zum Temperieren auf. Die Mittel 7 zum Temperieren umfassen in diesem Ausführungsbeispiel jeweils mehrere Peltier-Elemente 8 und einen Kühlkörper 9. Die Peltier-Elemente 8 sind jeweils mit elektrischen Anschlüssen 10 versehen, über die sie mit Strom versorgt werden können. Je nach Polung des Stroms werden dabei die Peltier-Elemente 8 zum Aufheizen oder zum Abkühlen eingesetzt, so dass mit ihnen eine Grundtemperierung der Förderleitung 6 erreicht werden kann. Der Kühlkörper 9 dient insbesondere zum Abstrahlen von Wärmeenergie, wenn durch das bzw. die Peltier-Elemente 8 die Förderleitung 6 gekühlt wird.

Über eine Verbindungseinheit 11 kann die Förderleitung 6 mit einem weiteren Bauteil verbunden werden. Je nach Ausführung der Vorrichtung kann dies entweder die bereits oben bezeichnete Zugabeleitung 2 oder allgemein eine Verdampfereinheit 12 sein. Teil der Verdampfereinheit 12 kann dann die Zugabeleitung 2 sein. Allgemein ist die Verbindungseinheit 11 zumindest teilweise aus einem Material mit einer Wärmeleitfähigkeit von weniger als 10 W/m K (Watt pro Meter und Kelvin) ausgebildet. Die Verbindungseinheit 11 ist insbesondere aus einem keramischen Werkstoff und/oder Polytetrafluorethylen (PTFE) ausgebildet. Die Verbindungseinheit 11 ist insbesondere so aufgebaut, dass über eine Länge 57 der Verbindungseinheit 11 ein Temperaturgradient von 40 K/mm (Kelvin pro Millimeter) und mehr aufrechterhalten werden kann. Dies erlaubt eine Verfahrensführung, bei der die Verdampfereinheit 12 und/oder die Zugabeleitung 2 eine deutlich höhere Temperatur aufweist als die Förderleitung 6. Beispielsweise kann die Verdampfereinheit eine Temperatur von 300°C oder mehr, 400°C oder mehr oder von 420°C oder mehr aufweisen und so zu einer im Wesentlichen vollständigen Verdampfung der wässrigen Lösung innerhalb der Verdampfereinheit 12 führen, während die Förderleitung 6 lediglich ein Temperaturniveau von 70°C oder mehr, 80°C oder mehr, oder 90°C oder mehr aufweist, um zu gewährleisten, dass die wässrige Lösung noch nicht in der Förderleitung 6 verdampft.

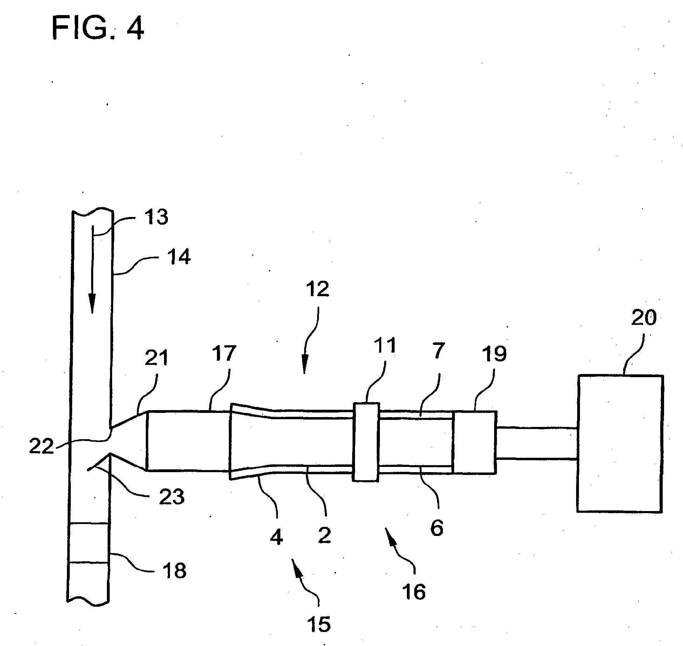

Fig. 4 zeigt schematisch eine Vorrichtung 15 zur Aufbereitung des Abgases 13 einer nicht gezeigten Verbrennungskraftmaschine. Das Abgas 13 der Verbrennungskraftmaschine strömt durch eine Abgasleitung 14. Die Vorrichtung 15 zur Aufbereitung der Gase 13 einer Verbrennungskraftmaschine umfasst einen Reduktionsmittellösungsverdampfer 16, einen Hydrolysekatalysator 17 und einen SCR-Katalysator 18. Im Reduktionsmittellösungsverdampfer 16 wird eine wässrige Lösung umfassend einen Reduktionsmittelvorläufer verdampft. Insbesondere wird als Reduktionsmittelvorläufer Harnstoff verwendet. Der-Reduktionsmittellösungsverdampfer 16 umfasst in diesem Ausführungsbeispiel eine Verdampfereinheit 12 umfassend eine durch Mittel 4 zur Aufheizung der Zugabeleitung 2 geheizte Zugabeleitung 2. Diese ist über eine Verbindungseinheit 11 mit einer Förderleitung 6 verbunden. Die Förderleitung 6 ist von Mitteln 7 zum Temperieren der Förderleitung 6 umgeben, die beispielsweise wie oben gezeigt ein oder mehrere Peltier-Elemente 8 und/oder einen Kühlkörper 9 umfassen können. Über Fördermittel 19 kann die wässrige Lösung mindestens eines Reduktionsmittelvorläufers aus einem entsprechenden Reservoir 20 in die Förderleitung 6 gefördert werden. In der Verdampfereinheit 12 wird ein Gas bereitgestellt, welches zumindest einen Reduktionsmittelvorläufer wie beispielsweise Harnstoff und ggf. auch bereits aus der Thermolyse von Harnstoff entstandenen Ammoniak umfasst. Dieses gasförmige Stoffgemisch wird in dem stromabwärts des Reduktionsmittellösungsverdampfers 16 ausgebildeten Hydrolysekatalysator 17 eingeleitet. Der Hydrolysekatalysator 17 ist so ausgebildet, dass durch eine entsprechende auf ihn aufgebrachte katalytisch aktive Beschichtung insbesondere Harnstoff zu Ammoniak hydrolysiert wird. Allgemein dient der Hydrolysekatalysator 17 zur Hydrolyse eines Reduktionsmittelvorläufers zu einem Reduktionsmittel. Das den Hydrolysekatalysator 17 verlassende Gas, welches ein Reduktionsmittel enthält und als Reduktionsmittelstoffgemisch bezeichnet wird, wird über eine Dosierleitung 21 in die Abgasleitung 14 zugegeben. Die Dosierleitung 21 mündet in einer Dosieröffnung in die Abgasleitung 14, die stromaufwärts des SCR-Katalysators 18 liegt. Stromabwärts der Dosieröffnung 22 und stromaufwärts des SCR-Katalysators 18 sind Vermischungsmittel 23 in Form eines Leitblechs ausgebildet, die eine Vermischung des Reduktionsmittelstoffgemisches mit dem Abgas 13 bewirken.

Somit erreicht den SCR-Katalysator eine Mischung aus Reduktionsmittel und Abgas, welches zu einer Reduktion der im Abgas 13 enthaltenen Stickoxide im SCR-Katalysator 18 führt. Bevorzugt wird hierbei eine solche Menge von Reduktionsmittelstoffgemisch bereitgestellt, dass eine möglichst vollständige Umsetzung der Stickoxide im Abgas 13 im SCR-Katalysator 18 erfolgen kann.

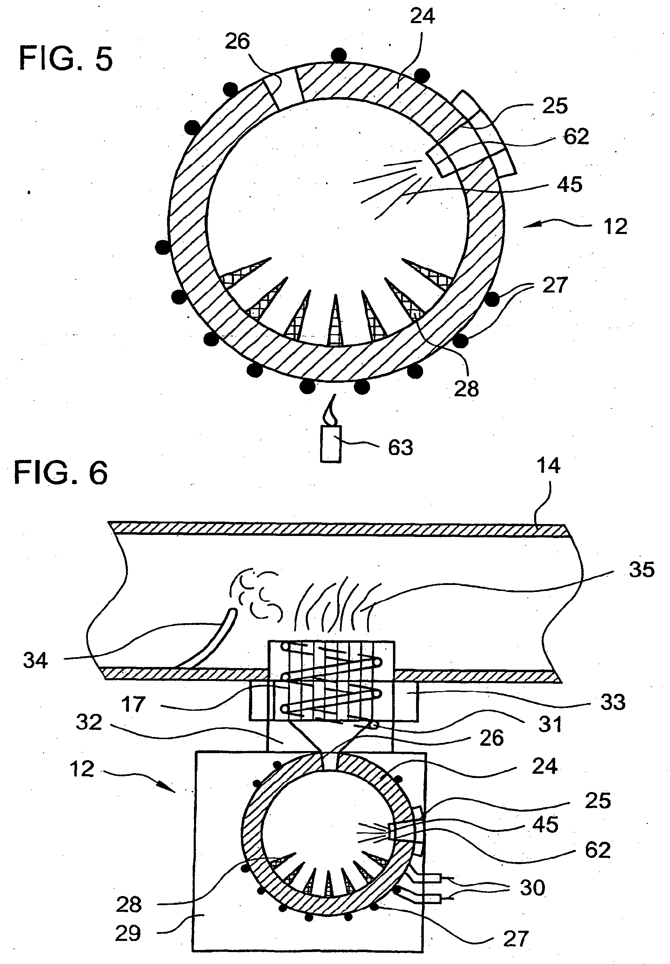

Fig. 5 zeigt schematisch ein weiteres Ausführungsbeispiel einer Verdampfereinheit 12. Diese Darstellung zeigt die Verdampfereinheit 12 im Schnitt. Die Verdampfereinheit 12 umfasst eine Verdampferkammer 24, die ein im Wesentlichen abgeschlossenes Volumen umfasst. In diesem Ausfuhrungsbeispiel weist die Verdampferkammer 24 lediglich eine erste Öffnung 25 zum Anschluss einer hier nicht gezeigten Förderleitung 6 zur Förderung der wässrigen Lösung und eine zweite Öffnung 26 zum Anschluss einer hier nicht gezeigten Zugabeleitung 2 zum Abführen des gasförmigen Stoffgemisches auf. In der ersten Öffnung 25 ist eine Düse 62 als Mittel zum Dosieren der wässrigen Lösung 45 in die Verdampferkammer 24 ausgebildet. Mit dieser Düse 62 wird die wässrige Lösung 45 in die Verdampferkammer 24 zudosiert Die Verdampfereinheit 12 weist zusätzlich Mittel zur Aufheizung der Verdampferkammer 24 auf. Diese Mittel sind im vorliegenden Ausführungsbeispiel durch entsprechende Heizleiter 27 gebildet, die in Kontakt mit der Verdampferkammer 24 stehen. Wie hier gezeigt kann dieser Heizleiter 27 asymmetrisch ausgebildet sein, d. h. in den Bereichen, die der ersten Öffnung 25 im Wesentlichen gegenüberliegen ist eine größere Dichte von Heizleitern pro Flächeneinheit ausgebildet als in den Bereichen, die nicht im Wesentlichen gegenüber der ersten Öffnung 25 liegen. Weiterhin umfassen diese Mittel hier kumulativ ein Mittel 63 zum Verbrennen von Kohlenwasserstoffen wie beispielsweise einen Brenner. Ein solcher Brenner kann auch geeignet sein, eine flammlose Verbrennung von Kohlenwasserstoffen durchzuführen.

Die Verdampferkammer 24 ist bevorzugt aus einem Werkstoff umfassend mindestens eines der folgenden Materialien ausgebildet: a) Kupfer, b) Aluminium; c) Edelstahl; d) Nickel-Basiswerkstoff und e) Chrom-Nickel-Stahl. Das Volumen der Verdampferkammer 24 beträgt bevorzugt 1,5 bis 10 cm³. Im Betrieb wird der Heizleiter 27 bevorzugt mit einer Heizleistung betrieben, die bei bis zu etwa einem Kilowatt pro Sekunde liegt, wobei die maximale Heizleistung in Abhängigkeit von der Anwendung festgelegt wird. Die maximale Heizleistung liegt bei Personenkraftwagen bevorzugt bei etwa 500 bis 700 W/s, bei Lastkraftwagen bei etwa 1200 bis 1500 W/s. Die Wärmekapazität der Verdampferkammer 24 liegt bevorzugt bei weniger als 120 J/K, besonders bevorzugt bei 100 bis 110 J/K. Die erste Öffnung 25 und die zweite Öffnung 26 schließen bevorzugt einen Winkel von 30 bis 70° ein. Die wässrige Lösung 45 wird bevorzugt mit bis zu 150 ml/min in die Verdampferkammer 24 gefordert, bevorzugt mit bis zu 100 ml/min, besonders bevorzugt mit bis zu 30 ml/min. Bevorzugt weist die Verdampferkammer 24 im Bereich der zweiten Öffnung 26 Mittel auf, mit denen ein Eindringen von Tropfen in die zweite Öffnung 26 vermieden werden kann. Insbesondere handelt es sich hierbei um Mittel, mittels derer eine zwischen dem Tropfen und der Wand der Verdampferkammer 24 liegender Gasfilm durchbrochen werden kann. Insbesondere handelt es sich hierbei um Vorsprünge der Wandungen oder ähnliches. Die Strukturen 28 können ebenfalls in diesem Bereich ausgebildet sein.

Weiterhin weist die Verdampferkammer 24 im Inneren eine oder mehrere Strukturen 28 auf, mittels derer eine größere Oberfläche zur Verdampfung der wässrigen Lösung geschaffen wird. Diese Strukturen 28 sind im vorliegenden Ausführungbeispiel relativ groß eingezeichnet, es kann sich hierbei aber auch um eine strukturierte Oberfläche handeln, die beispielsweise durch Aufbringung einer entsprechenden Beschichtung auf die innere Oberfläche der Verdampferkammer 24 erreicht werden kann. Alternativ oder zusätzlich können diese Strukturen 28 auch makroskopische Strukturen umfassen, die eine Strukturamplitude von einigen Millimetern oder sogar mehr aufweisen. Allgemein sind diese Strukturen 28 als Mittel zur Erhöhung der Benetzungsfähigkeit der Oberfläche der Verdampferkammer 24 zu verstehen.

Fig. 6 zeigt schematisch das erste Ausführungsbeispiel der Verdampferkammer 24 im Anschluss an eine Abgasleitung 14. Hierbei ist die Verdampferkammer 24 mit einer Ummantelung 29 versehen. Diese Ummantelung 29 wird bevorzugt aus einem entsprechenden thermischen Isolator ausgebildet, welcher Wärmeverluste an die Umgebung reduziert. Die Mittel 27 zur Aufheizung der Verdampferkammer 24 sind über Heizleiteranschlüsse 30 mit einer nicht gezeigten Stromquelle verbindbar.

Über die zweite Öffnung 26 ist die Verdampfereinheit 12 mit einem Hydrolysekatalysator 17 verbunden. Der Hydrolysekatalysator 17 weist Mittel 31 zum Temperieren des Hydrolysekatalysators 17 auf, die im vorliegenden Ausführungsbeispielaus einem entsprechenden Heizdraht bestehen, mit welchem der Hydrolysekatalysator 17 umwickelt ist. Um den Hydrolysekatalysator 17 herum ist eine entsprechende Ummantelung 32 ausgebildet, die insbesondere eine thermische Isolierung des Hydrolysekatalysators 17 gegenüber der Umgebung darstellt, um auftretende Wärmeverluste möglichst zu minimieren. Im vorliegenden Ausführungsbeispiel ist der Hydrolysekatalysator direkt mit der Abgasleitung 14 verbunden, indem er in diese hineinragt. In der Abgasleitung 14 ist eine entsprechende Bohrung augebildet, in die der Hydrolysekatalysator 17 bzw. dessen Ummantelung 32 möglichst dicht eingebracht werden kann. Durch entsprechende Verbindungsmittel 33 kann eine möglichst dichte Verbindung zwischen Hydrolysekatalysator 17 und Abgasleitung 14 hergestellt werden. Weiterhin sind als passive Vermischungsmittel ein Leitblech 34 ausgebildet, mittels dem das den Hydrolysekatalysator 17 verlassende Reduktionsmittelstoffgemisch 35 mit dem in der Abgasleitung 14 strömenden Abgas vermischt wird.

Durch die Verdampfereinheit 12 wird im Betrieb ein gasförmiges Stoffgemisch aus einer wässrigen Lösung hergestellt, die Harnstoff als Reduktionsmittelvorläufer enthält. Das in der Verdampfereinheit 12 entstandene gasförmige Stoffgemisch enthält zumindest Harnstoff und gegebenenfalls auch bereits Ammoniak, welcher durch Thermolyse des entsprechenden Harnstoffs entstanden ist. Dieses Stoffgemisch wird über die zweite Öffnung 26 in den Hydrolysekatalysator 17 geführt, in dem eine im Wesentlichen vollständige Hydrolyse des Harnstoffs zu Ammoniak erfolgt. Hierbei entsteht im Hydrolysekatalysator ein Redüktionsmittelstoffgemisch 35, welches Ammoniak umfasst. Insbesondere ist eine Verfahrensführung bevorzugt, bei der 98 % und mehr des Harnstoffs schlussendlich in Ammoniak umgewandelt werden.

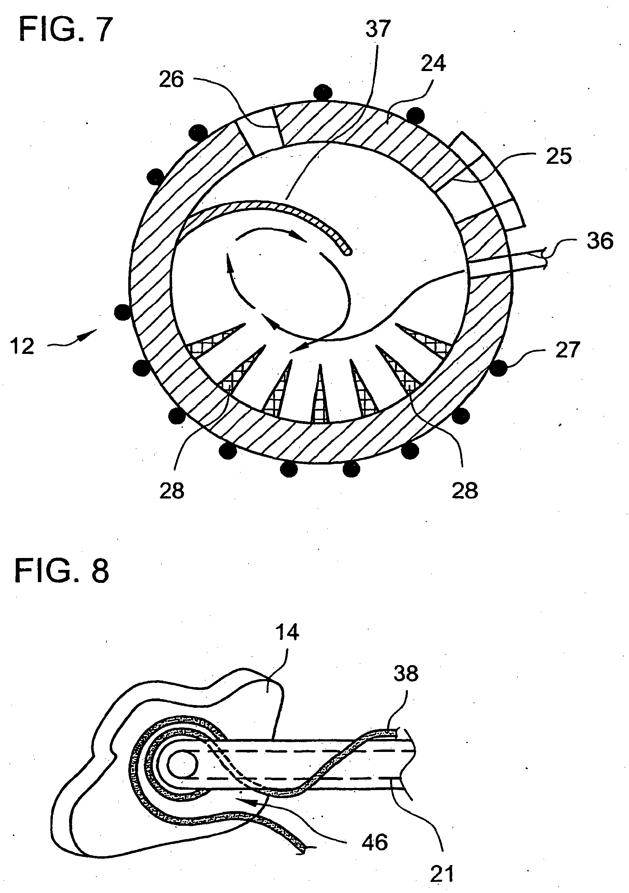

Fig. 7 zeigt schematisch eine alternative Ausgestaltung der Verdampfereinheit aus den Fig. 5 und 6. Im Unterschied zu dem ersten oben gezeigten Ausführungsbeispiel weist dieses zusätzlich eine dritte Öffnung 36. Durch diese dritte Öffnung 36 kann im Betrieb kontinuierlich oder pulsatil Abgas in die Verdampferkammer 24 eingeleitet werden. Hierdurch kann im Vergleich zu dem ersten Ausführungsbeispiel eine bessere Verteilung des Harnstoffs im entstehenden Gas erreicht werden. Zudem lässt sich eine solche Verdampfereinheit 12 auch zur Verdampfung von Festharnstoff einsetzen, da durch die durch die dritte Öffnung 36 eingebrachten Abgase der Verbrennungskraftmaschine Wasser in die Verdampferkammer 24 eingebracht wird, welches später im Hydrolysekatalysator 17 zur Hydrolyse des Harnstoffs zu Ammoniak eingesetzt werden kann.

Fig. 8 zeigt schematisch die Mündung einer Dosierleitung 21 in die Abgasleitung 14 als Teil einer entsprechenden Zugabeeinheit 46. Hierbei ist die Dosierleitung 21 von einem Heizleiter 38 umgeben, welcher auch um die Mündung der Dosierleitung 21 in die Abgasleitung 14 herum ausgebildet ist.

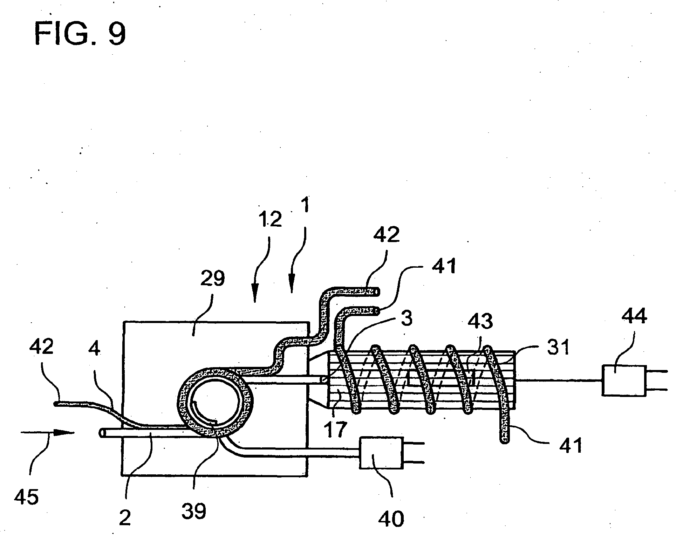

Fig. 9 zeigt schematisch eine weitere Möglichkeit einer Vorrichtung 1 zum Bereitstellen eines ein Reduktionsmittel umfassenden gasförmigen Stoffgemisches in einem ersten Schnittpunkt. Die Vorrichtung 1 umfasst eine Zugabeleitung 2, die mit einem entsprechenden Mittel 4 zur Auffassung der Zugabeleitung 2 umwickelt ist oder mit dieser gemeinsam aufgewickelt ist. Zugabeleitung 2 und Mittel 4 zur Aufheizung der Zugabeleitung 2 sind gemeinsam in einer Ummantelung 29 ausgebildet. Innerhalb der Wicklung der Zugabeleitung 2 ist ein erster Temperaturmessfühler 39 ausgebildet. Dieser erste Temperaturmessfühler 39 ist über ein erstes Verbindungselement 40 mit einer entsprechenden hier nicht gezeigten Steuereinheit verbindbar. Über die Abgabeöffnung 3 der Zugabeleitung 2 ist die Verdampfereinheit 12 mit einem Hydrolysekatalysator 17 verbunden. Der Hydrolysekatalysator 17 weist eine Beschichtung auf, die die Hydrolyse von Harnstoff zu Ammoniak katalysiert. Der Hydrolysekatalysator 17 ist mit Mitteln 31 zur Temperierung des Hydrolysekatalysators umgeben, die einen entsprechend ausgebildeten Heizdraht umfassen. Diese Mittel 31 zur Temperierung des Hydrolysekatalysators 17 können durch entsprechende erste Heizleiter-Anschlüsse 41 mit einer entsprechenden Stromversorgung elektrisch leitend verbunden werden. Entsprechendes gilt für die Mittel 4 zur Aufheizung der Zugabeleitung 2, die über entsprechende zweite Heizleiteranschlüsse 42 mit einer entsprechenden Stromversorgung versehen werden können. Der Hydrolysekatalysator 17 weist einen zweiten Temperaturmessfühler 43 auf, welcher über ein entsprechendes zweites Verbindungselement 44 mit einer nicht gezeigten Steuereinheit verbunden werden kann. Mittels des zweiten Temperaturmessfühlers 43 ist die Temperatur innerhalb oder am Hydrolysekatalysator 17 bestimmbar.

Im Betrieb wird eine wässrige Harnstofflösung 45 in die Zugabeleitung 2 gefördert. Durch die Mittel 4 zur Aufheizung der Zugabeleitung 2 erfolgt eine Aufheizung der Zugabeleitung 2 und damit eine Verdampfung dieser wässrigen Harnstofflösung und ggf. je nach Temperierung zu einer zumindest teilweisen Thermolyse des enthaltenen Harnstoffs zu Ammoniak. Durch die Abgabeöffnung 3 wird das entsprechende Gasförmige Stoffgemisch in den Hydrolysekatalysator 17 gegeben, dem eine Hydrolyse, bevorzugt eine im Wesentlichen vollständige Hydrolyse des umfassten Harnstoffs zu Ammoniak stattfindet. Den Hydrolysekatalysator 17 verlässt ein entsprechendes Reduktionsmittelstoffgemisch 35, welches in einer Abgasleitung 14 des Abgassystems einer Verbrennungskraftmaschine einleitbar ist. Bevorzugt ist hierbei eine Verfahrensführung, bei der durch die Temperaturmessfühler 39, 43 die Temperaturen der Verdampfereinheit 12 und/oder des Hydrolysekatalysators 17 überwacht werden und beide Bauteile 12, 17 über die entsprechenden Mittel 4, 31 beheizbar sind.

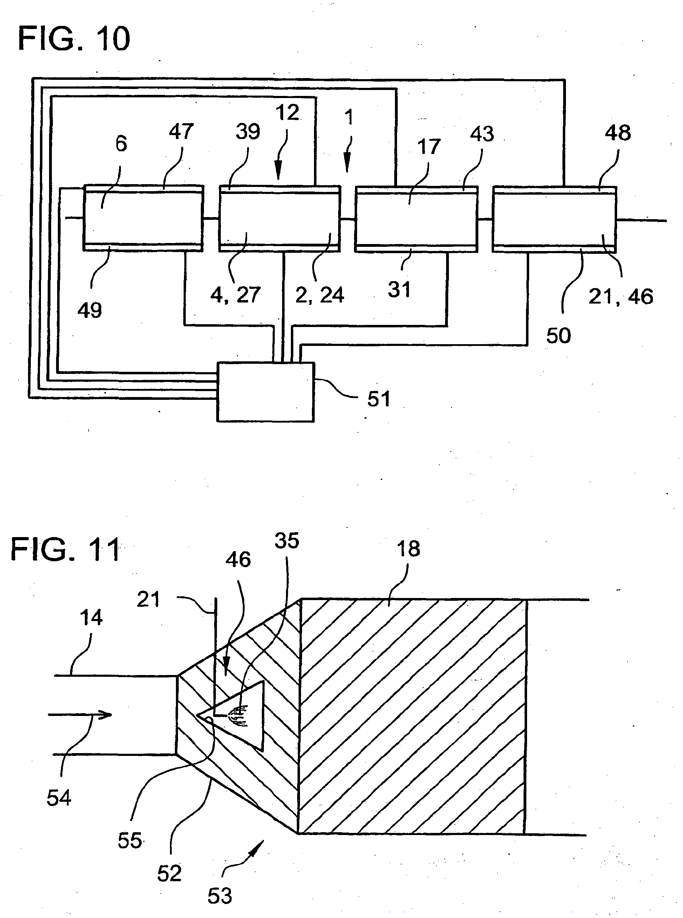

Fig. 10 zeigt schematisch eine Vorrichtung 1 zur Bereitstellung eines gasförmigen Stoffgemisches 35 umfassend mindestens ein Reduktionsmittel. Dieses umfasst sequentiell eine Förderleitung 6, mittels derer eine wässrige Lösung aus einem nicht gezeigten Reservoir in eine Verdampfereinheit 12 befördert wird. An die Verdampfereinheit 12 schließt sich ein Hydrolysekatalysator 17 und an diesen eine Dosierleitung 21 zur Zugabe des entsprechenden Stoffgemisches zu einer nicht gezeigten Abgasleitung 14 oder eine Zugabeeinheit 46 zur Zugabe des Reduktionsmittelstoffgemisches an die Abgasleitung 14 an. Die Verdampfereinheit 12 weist einen dritten Temperaturmessfühler 47 auf. Mit diesem dritten Temperaturmessfühler 47 kann die Temperatur der oder in der Förderleitung 6 gemessen werden. Optional weist die Dosierleitung 21 und/oder die Zugabeeinheit 46 einen vierten Temperaturmessfühler 48 auf, mit dem die Temperatur der Dosierleitung 21 und/oder der Zugabeeinheit 46 oder die Temperatur in der Dosierleitung 21 und/oder der Zugabeeinheit 46 bestimmt werden kann. Die Verdampfereinheit 12 weist Mittel 4 zur Aufheizung der Zugabeleitung 2 und/oder Mittel 27 zur Aufheizung der Verdampferkammer 24 auf. Der Hydrolysekatalysator 17 kann optional oder als Alternative und/oder als Zusatz zu den Mitteln 4, 27 Mittel 31 zur Temperierung des Hydrolysekatalysators 17 aufweisen. Optional, alternativ und/oder zusätzlich weist die Förderleitung 6 Temperiermittel 49 auf, mittels derer die Förderleitung 6 temperiert werden kann. Insbesondere sind hier ein oder mehrere Peltier-Elemente möglich, vorteilhaft und erfindungsgemäß. Die Dosierleitung 21 und/oder die Zugabeeinheit 46 weisen Zugabetemperiermittel 50 auf, mittels derer die Dosierleitung 21 und/oder die Zugabeeinheit 46 temperiert werden kann. Auch hier ist der Einsatz mindestens eines Peltier-Elementes vorteilhaft.

Sämtliche ausgebildete Temperiermittel 4, 27, 31, 49, 50 und sämtliche ausgebildete Temperaturmessfühler 39, 43, 47, 48 sind mit einer Steuereinheit 51 verbunden. Mittels dieser Steuereinheit 51 erfolgt eine Regelung der Temperatur in einem Regelkreises, welcher mindestens ein Mittel 4, 27, 31, 49, 50 zum Temperieren und mindestens einen Temperaturmessfühler 39, 43, 47, 48 umfasst. Bevorzugt ist die Zahl der Temperaturmessfühler 39, 43, 47, 48 größer als die Zahl der Mittel 4, 27, 31, 49, 50 zum Temperieren der Bauteile 6, 2, 24, 17, 21, 46. Die Steuereinheit 51 ist bevorzugt mit einer Steuerung der Verbrennungskraftmaschine verbunden oder in diese integriert. Die Daten der Steuerung der Verbrennungskraftmaschine und die Betriebsparameter der Verbrennungskraftmaschine können in vorteilhafter Weise bei der Steuerung der Verdampfung und/oder der Förderung zu der Verdampfungseinheit 12 berücksichtigt werden.

Fig. 11 zeigt schematisch einen Ausschnitt aus einer Vorrichtung zur Bereitstellung eines gasförmigen Stoffgemisches. In einer Abgasleitung 14 ist vor einem SCR-Katalysator 18 ein Wabenkörper 52 mit für ein Fluid durchströmbaren Kanälen ausgebildet, welcher Teil eines entsprechenden Vermischungsmittels 53 ist. Der Wabenkörper 52 ist so ausgebildet, dass das Abgas diesen zumindest zum Teil in einem Winkel zur Hauptströmungsrichtung des Abgases durchströmen kann. Die Hauptströmungsrichtung 54 wird dabei durch einen entsprechenden Pfeil in Fig. 11 angedeutet. Im vorliegenden Ausführungsbeispiel ist der Wabenkörper 52 konisch ausgebaut. Der Wabenkörper weist insbesondere eine größere Aussparung 55 auf, die frei von Kanälen ist. In diese Aussparung 55 mündet die Dosierleitung 21 als Teil der Zugabeeinheit 46 durch die im Betrieb das Reduktionsmittelstoffgemisch 35 eingegeben wird.

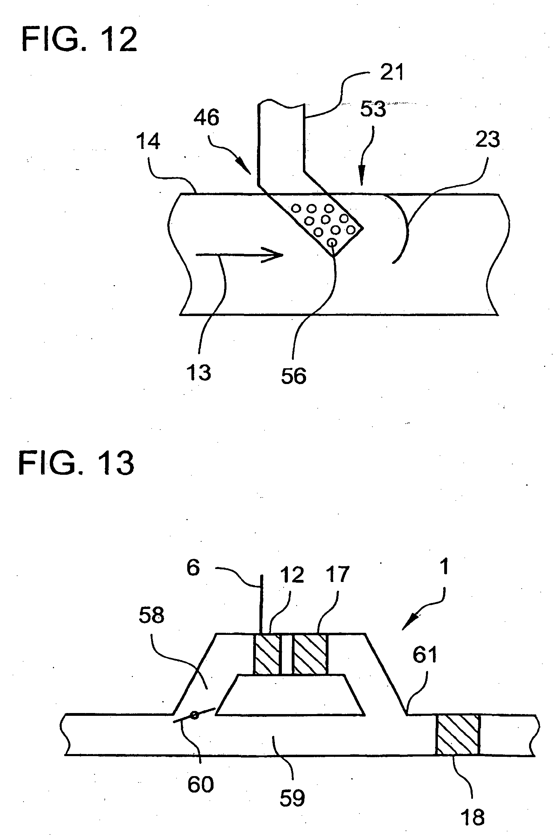

Fig. 12 zeigt schematisch ein Beispiel einer Zugabeeinheit 46 mit einer Dosierleitung 21 zur Zugabe des Reduktionsmittelstoffgemisches in eine Abgasleitung 14. Hierbei durchdringt die Dosierleitung 21 die Wandung der Abgasleitung 14 in einem gekrümmten Zustand. Die Dosierleitung 21 weist in dem Bereich, welcher in die Abgasleitung 14 hineinragt, Perforationen 56 auf. Hierbei ist die Krümmung bzw. der gekrümmte Eintritt der Dosierleitung 21 in die Abgasleitung 14 nicht zwingend, genauso gut könnte die Dosierleitung 21 auch senkrecht bzw. gerade in die Abgasleitung 14 eintreten. Zusätzlich ist hier ein Leitblech 23 ausgebildet, welches zu einer weiter verbesserten Vermischung des Reduktionsmittelstoffgemisches mit dem Abgas 13 in der Abgasleitung 14 führt.

Fig. 13 zeigt schematisch eine Ausgestaltung der Vorrichtung 1 zur Aufbereitung eines Abgases einer nicht gezeigten Verbrennungskraftmaschine. In einem ersten Abgasstrang 58 sind hierbei die Verdampfungseinheit 12 und der Hydrolysekatalysator 17 ausgebildet. Über ein Mittel 60 zur Strömungsleitung wird eine Verteilung des Abgases auf den ersten 58 und einen zweiten Abgasstrang 59 erreicht. Stromabwärts der Einmündung 61 des ersten Abgasstrangs 58 in den zweiten Abgasstrang 59 ist der SCR-Katalysator 18 ausgebildet.

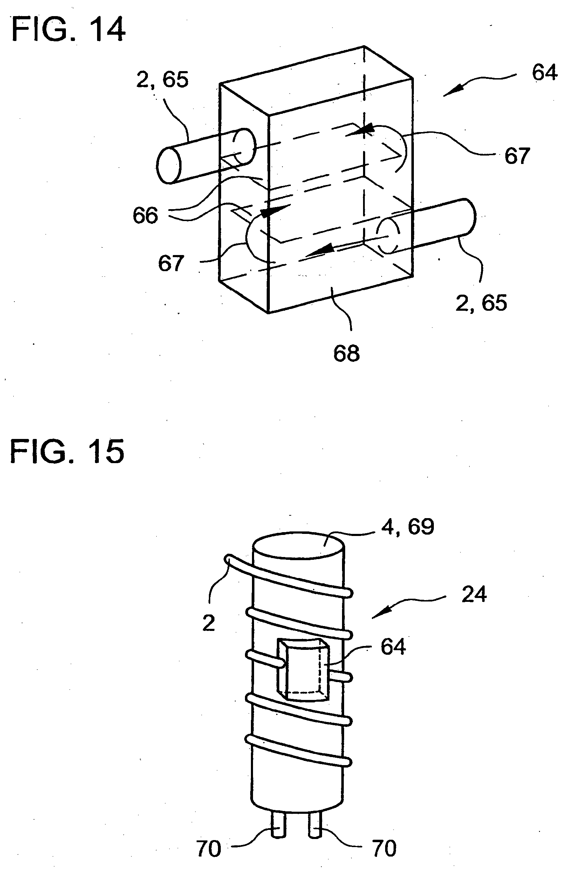

Bevorzugt weist die Verdampfereinheit 12 Mittel 64 zum Abscheiden von Tropfen auf, die beispielsweise innerhalb der Zugabeleitung 2 oder in oder nach der zweiten Öffnung 26 der Verdampferkammer 24 ausgebildet sein können. Fig. 14 zeigt ein Ausführungsbeispiel eines solchen Mittels 64 zum Abscheiden von Tropfen. Dieses Mittel 64 ist mit der Zugabeleitung 2 oder allgemein einer Leitung 65 verbunden, durch die Dampf tritt. Sollten noch Tropfen in dem Dampf vorhanden sein, werden diese im vorliegenden Beispiel durch Trägheitswirkung abgeschieden. In dem Mittel 64 sind eine oder mehrere Prallplatten 66 ausgebildet, die den Strom zu Umlenkungen 67 zwingen. Prallplatte 66 und/oder das Gehäuse 68 des Mittels 64 sind beheizt, so dass abgeschiedene Tropfen ebenfalls verdampft werden. Statt dem hier gezeigten Mittel 64 zum Abscheiden von Tropfen können andere Maßnahmen alternativ oder kumulativ getroffen werden, beispielsweise kann die Zugabeleitung 2 oder die Leitung 65 bereichsweise verengte Querschnitte, Vorsprünge, Umlenkungen oder ähnliches aufweisen.

Fig. 15 zeigt schematisch ein weiteres Ausführungsbeispiel einer Verdampfereinheit 12, bei der eine Zugabeleitung 2 durch Mittel 4 zum Beheizen der Zugabeleitung 2 beheizbar sind. Die Mittel 4 zum Beheizen der Zugabeleitung 2 umfassen hier ein stabförmiges Heizelement 69, welches über elektrische Anschlüsse 70 mit einer Stromquelle verbindbar ist. In der Zugabeleitung 2 ist ein Mittel 64 zum Abscheiden von Tropfen ausgebildet, welches über den Kontakt zu dem stabförmigen Heizelement 69 beheizbar ist.

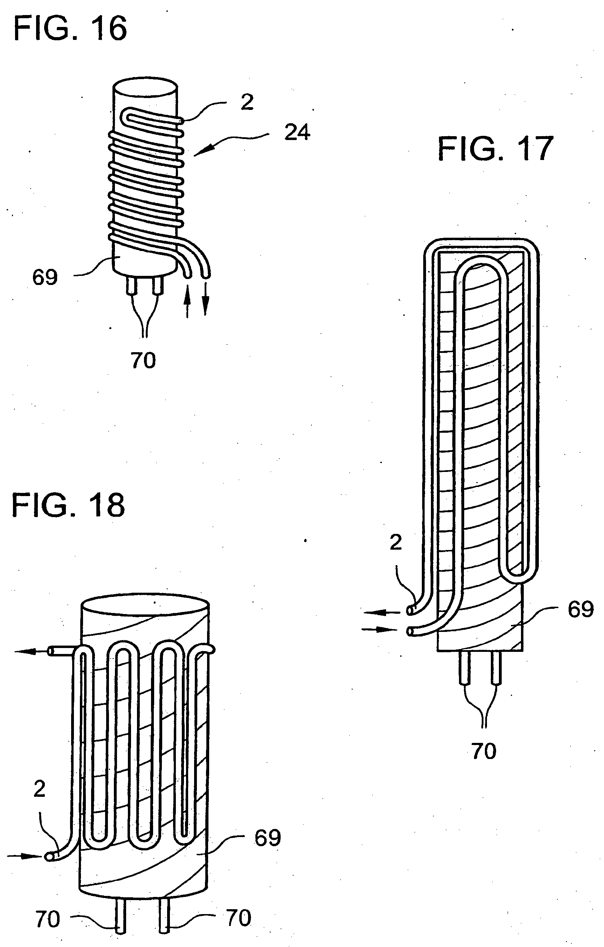

Fig. 16 zeigt schematisch ein weiteres Ausführungsbeispiel einer Verdampfereinheit 12, bei der die Zugabeleitung 2 in Form einer Schlaufe zweimal um das stabförmige Heizelement 69 gewickelt ist.

Fig. 17 und 18 zeigen Ausführungsbeispiele von Verdampfereinheiten 12, bei denen die Zugabeleitung 2 nicht um die Längsachse des stabförmigen Heizelementes 69 gewickelt ist sondern in Schlaufen an dem stabförmigen Heizelement 69 befestigt ist. Grundsätzlich ist eine stoffschlüssige Verbindung zwischen Zugabeleitung 2 und stabförmigen Heizelement 69 bevorzugt, insbesondere eine Hartlötverbindung ("brazed connection").

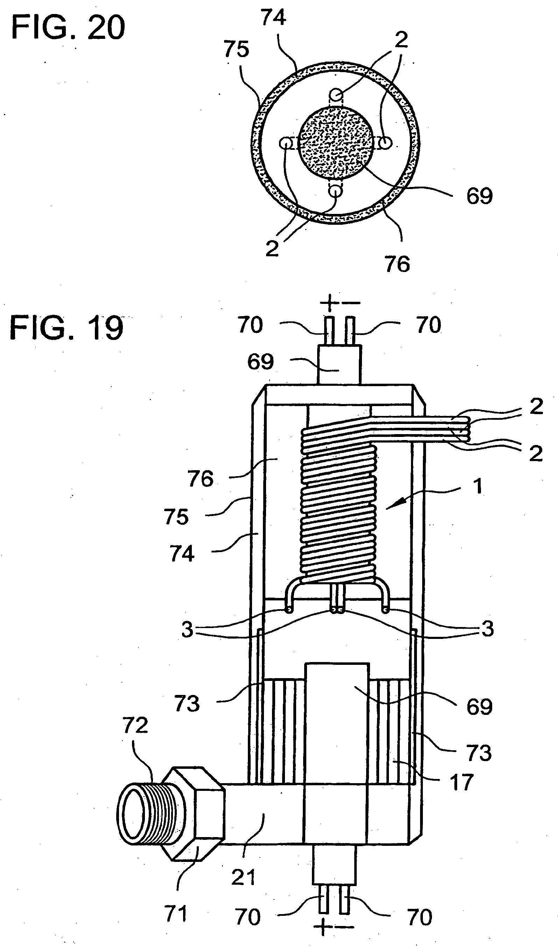

Fig. 19 und 20 zeigen schematisch ein weiteres Ausführungsbeispiel einer Vorrichtung 1 zum Bereitstellen eines gasförmigen Stoffgemisches umfassend mindestens einen der folgenden Stoffe: a) ein Reduktionsmittel, bevorzugt Ammoniak, und b) mindestens einen Reduktionsmittelvorläufer, insbesondere Harnstoff mit einem Hydrolysekatalysator 17. Die Vorrichtung 1 umfasst mindestens einen Zugabeleitung 2, im vorliegenden Ausführungsbeispiel vier Zugabeleitungen 2, die spiralförmig um ein stabförmiges Heizelement 69 gewickelt sind. Jede der Zugabeleitungen 2 weist jeweils eine Abgabeöffnung 3 auf, durch die im Betrieb ein gasförmiges Stoffgemisch abgegeben wird, welches ein Reduktionsmittel umfasst. Die Abgabeöffnungen 3 sind jeweils so verteilt, dass sie auf einem Kreis im Wesentlichen gleich verteilt sind. Die Zugabeleitungen 2 sind mit einem hier nicht gezeigten Reservoir 20 verbunden, aus welchem mittels einem Fördermittel 19 eine wässrige Lösung 45 mindestens eines Reduktionsmittelvorläufers in die Zugabeleitung 2 gefördert wird. Zugabeleitungen 2 und Heizelement 69 sind Teil eines entsprechenden Reduktionsmittellösungsverdampfers 16.

Stromabwärts der Abgabeöffnungen 3 ist ein Hydrolysekatalysator 17 ausgebildet, der ebenfalls von einem stabförmigen Heizelement 69 beheizt werden kann. In einer vorteilhaften Weiterbildung ist nur ein stabförmiges Heizelement 69 ausgebildet, welches sowohl mit der oder den Zugabeleitungen 2 als auch mit dem Hydrolysekatalysator 17 in wärmetechnischem Kontakt steht. Der Hydrolysekatlysator 17 ist im vorliegenden Ausführungsbeispiel als ringförmiger Wabenkörper ausgeführt. Stromabwärts des Hydrolysekatalysators 17 schließt sich eine Dosierleitung 21 an, über die im Betrieb der Gasstrom umfassend mindestens ein Reduktionsmittel in die Abgasleitung 14 geführt werden kann. Über die Verbindungsmittel 71 ist eine mechanische Verbindung zur Abgasleitung 14 herstellbar. Weiterhin ist eine thermische Isolierung 72 ausgebildet, mittels der der Hydrolysekatalysator 17 thermisch von der Abgasleitung 14 abgekoppelt wird. Weiterhin ist ein Wärmeschild 73 ausgebildet, mittels dem der Hydrolysekatalysator 17 vor einer Abstrahlung von Wärme geschützt wird. Weiterhin ist eine Lufstpaltisolierung 74 zwischen einem Außengehäuse 75 und einem Innengehäuse 76 ausgebildet, die ebenfalls der thermischen Isolierung dient.

Fig. 20 zeigt einen Querschnitt durch im Bereich der Zugabeleitungen 2, die rings um das stabförmige Heizelement 69 zu erkennen sind.

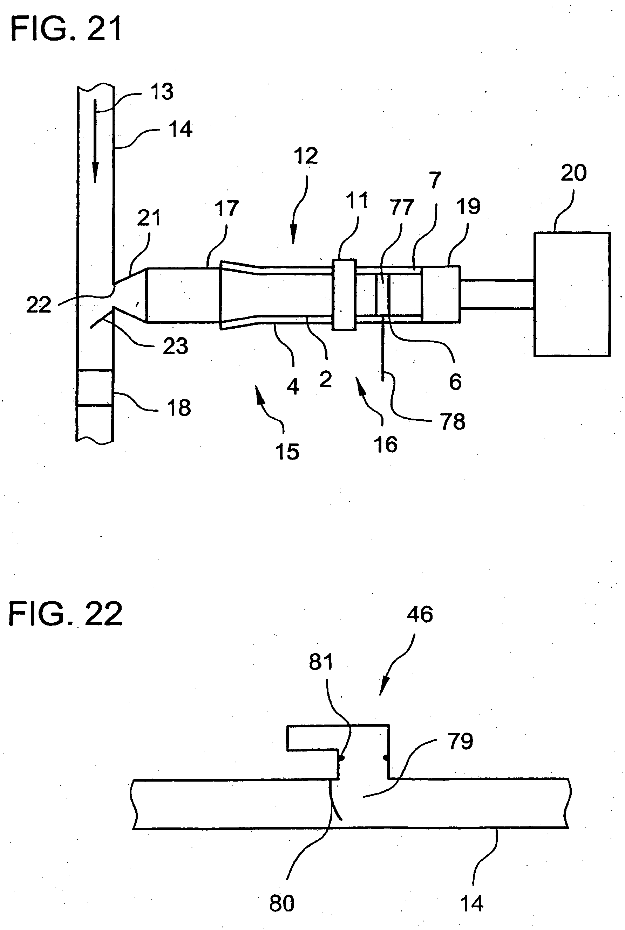

Fig. 21 zeigt schematisch ein weiteres Ausführungsbeispiel einer Vorrichtung 15 zur Aufbereitung von Abgas 13. Im Unterschied zu der Ausführungsform in Fig. 4 ist in der Förderleitung 6 ein Ventil 77 ausgebildet, welches zum Dosieren der wässrigen Lösung 45 in die Verdampfereinheit 12 dient. Das Ventil 77 ist über einen Steueranschluss 78 ansteuerbar.

Fig. 22 zeigt schematisch einen Mündungsbereich 79 einer Zugabeeinheit 46 in die Abgasleitung 14. Die Abgasleitung 14 und/oder die Zugabeeinheit weist hier eine Blende 80 auf, die im Betrieb im Mündungsbereich 79 eine Tot- oder Beruhigungszone der Abgasströmung und mithin einen Bereich mit verringertem Druck schafft und somit dafür sorgt, dass kein Abgas in die Zugabeeinheit 46 gedrückt wird. Die Zugabeeinheit 46 weist weiterhin einen Temperatursensor 81 auf, der einen ringförmig ausgebildeten Thermowiderstand umfasst Sollten sich in diesem Bereich Ablagerungen bilden, so kann der Temperatursensor 81 mit einer Stromquelle (nicht gezeigt) verbunden werden, um so durch Erhöhung der Temperatur auf eine zweite Solltemperatur, beispielsweise von 550°C oder mehr oder sogar von 600°C und mehr eine Auflösung oder Verringerung der Ablagerungen bewirken.

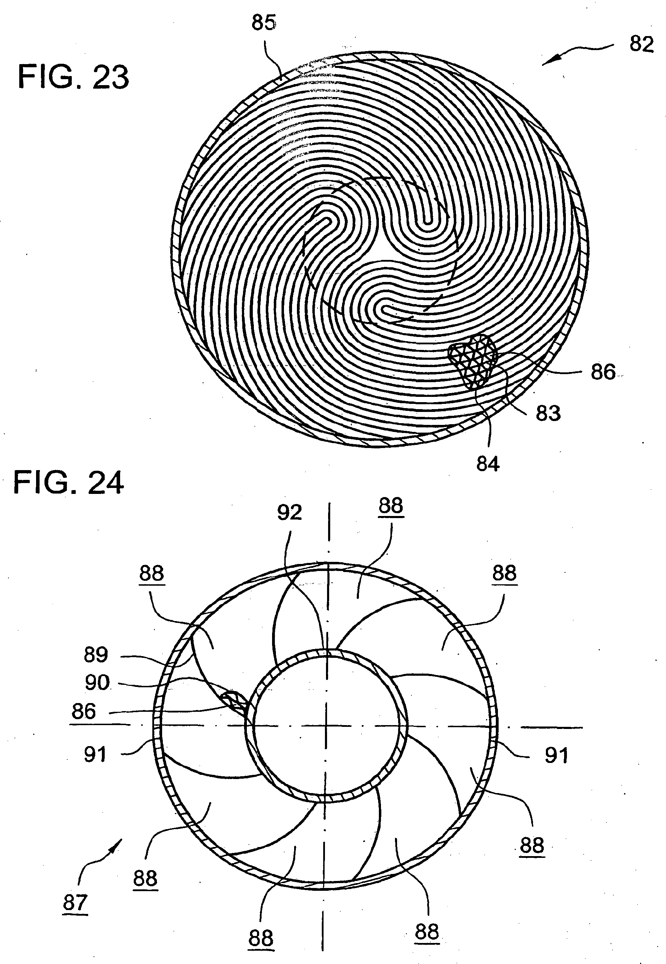

Fig. 23 zeigt schematisch einen Querschnitt eines Wabenkörpers 82, der sowohl als Hydrolysekatalysator 17 als auch als SCR-Katalysator 18 eingesetzt werden kann, wobei hierbei andere katalytisch aktive Beschichtungen aufgetragen werden müssen. Der Wabenkörper 82 ist aus glatten metallischen Lagen 83 und gewellten metallischen Lagen 84 aufgebaut, die in diesem Ausführungsbeispiel zu drei Stapeln geschichtet und dann miteinander verwunden wurden. Der Wabenkörper 82 umfasst ferner ein Mantelrohr 85, welches den Wabenkörper 82 nach außen abschließt. Glatte 83 und gewellte Lagen 84 bilden Kanäle 86, die für Abgas 13 durchströmbar sind.

Fig. 24 zeigt ein weiteres Beispiel eines Wabenkörpers 87, der ringförmig ausgebildet ist und sowohl als Hydrolysekatalysator 17 als auch als SCR-Katalysator 18 einsetzbar ist, wobei hierbei andere katalytisch aktive Beschichtungen aufgetragen werden müssen. Der Wabenkörper 87 ist aus Lagen 88 ausgebildet, die glatte 89 und gewellte Abschnitte 90 aufweisen, die aufeinander gefalten sind und Kanäle 86 bilden, die für Abgas 13 durchströmbar sind Der Wabenkörper 87 ist durch ein äußeres Mantelrohr 91 und ein inneres Mantelrohr 92 abgeschlossen.

Insbesondere bei einer durch Mittel 4, 69 beheizten Zugabeleitung 2 ist es grundsätzlich vorteilhaft, neben einer einseitigen Beheizung auch eine Beheizung von der anderen Seite vorzusehen. So können weitere hülsenförmige Heizelemente ausgebildet sein, die von außen die Zugabeleitung umschließen. Grundsätzlich ist es vorteilhaft, wenn an einem bestimmten Querschnitt der Zugabeleitung 2 sich im Betrieb sich die Temperatur über den Umfang höchstens um +25°C oder -25°C von einer mittleren Temperatur unterscheidet.

Als Hydrolysekatalysator 17 ist grundsätzlich auch ein mit einer die Hydrolyse insbesondere von Harnstoff zu Ammoniak katalysierenden Beschichtung versehenes Rohr oder aber ein Mantelrohr mit mindestens einer innen am Außenumfang angebrachten strukturierten metallischen Lage, die bevorzugt einen frei durchströmbaren Querschnitt radial in ihrem Inneren aufweist, der mindestens 20% des Gesamtquerschnitts des Mantelrohrs beträgt. Diese Ausführungsformen werden bevorzugt von außen beheizt.

Grundsätzlich wird vor dem Beginn der Bereitstellung von Reduktionsmittel vor dem SCR-Katalysator 18 bevorzugt wie folgt verfahren:
- Zunächst wird geprüft, ob eine Stromversorgung oder Brennstoffversorgung für die vorhandenen Temperier- und/oder Aufheizmittel 4, 27, 31, 49, 50, 63, 69 gesichert ist;
- wenn festgestellt wird, dass die Strom- und/oder Brennstoffversorgung gesichert ist, dann wird die Verdampfereinheit 12 und gegebenenfalls der Hydrolysekatalysator 17 auf jeweils eine vorbestimmte Solltemperatur aufgeheizt, insbesondere eine Zugabeleitung 2 auf etwa 350 bis 450°C und/oder eine Verdampferkammer 24 auf etwa 350 bis 450°C; bevorzugt jeweils etwa 380 °C parallel wird wässrige Lösung 45 bis zur Verdampfereinheit 24, insbesondere bis zur Verbindungseinheit 11 gefördert, wobei einerseits ein Volumen an wässriger Lösung 45 gefördert werden kann, welches im Wesentlichen dem Volumen der Förderleitung 6 entspricht und andererseits an entsprechender Stelle, beispielsweise an, in oder benachbart zur Verbindungseinheit 11 ein entsprechender Sensor, beispielsweise basierend auf einer Leitfähigkeitsmessung, ausgebildet werden kann;
- dann wird die Temperatur des SCR-Katalysators 18 bzw. der Abgasleitung 14 bestimmt, insbesondere gemessen und/oder aus den Daten einer Motorsteuerung berechnet.

Liegt die Temperatur des SCR-Katalysators 18 über einem vorgebbaren Grenzwert, der insbesondere der Starttemperatur ("light off"-Temperatur) des SCR-Katalysators 18 liegt, wird die Verdampfereinheit 12 mit der wässrigen Lösung 45 beschickt. Haben die Verdampfungseinheit 12, die Zugabeleitung 2 und/oder die Verdampferkammer 24 noch im wesentlichen ihre Betriebstemperatur, so können die oben angegebenen Diagnoseschritte unterbleiben.

Im Betrieb wird die in die Verdampfereinheit 12 eingebrachte Heizleistung mit der Fördermenge an wässriger Lösung 45 korreliert. Insbesondere bedeutet dies, dass geprüft wird, was für eine Soll-Heizleistung für die Verdampfung der jeweiligen Fördermenge benötigt wird. Liegt die gemessene Ist-Heizleistung für eine Zeitspanne unterhalb der Soll-Heizleistung, so wird eine Warnung an den Benutzer ausgegeben, da dann eine Reduzierung des Querschnitts der Zugabeleitung 2 und/oder der Dosierleitung 21 vorliegen kann.

Weiterhin ist es vorteilhaft, in regelmäßigen, vorgebbaren Zeitabständen die Verdampfereinheit 12, die Zugabeleitung 2, die Verdampferkammer 24, den Hydrolysekatalysator 17, die Dosierleitung 21 und/oder die Zugabeeinheit 46 auf eine Temperatur aufzuheizen, die über der normalen Betriebstemperatur liegt, um so gegebenenfalls vorhandene Ablagerungen aufzulösen.

Beim Beenden der Verdampfung, die beispielsweise dann erfolgt, wenn die Verbrennungskraftmaschine abgestellt wird, kann eine Rückförderung der wässrigen Lösung 45 aus der Zugabeleitung 2 erfolgen. Bevorzugt wird vor Rückförderung aus der Zugabeleitung 2 zunächst die Förderung von wässriger Lösung 45 eingestellt werden, wobei jedoch weiterhin die Verdampfereinheit 12, die Zugabeleitung 2 und/oder die Verdampferkammer 24 auf übliche Temperatur beheizt wird, um so eine vollständige Verdampfung durchzuführen und so zu verhindern, dass bei der Rückförderung auch eventuelle Verunreinigungen in der Verdampfereinheit 12, der Zugabeleitung 2 und/oder der Verdampferkammer 24 in die Förderleitung 6 gelangen. Nach Verstreichen einer gewissen Zeit kann dann die Rückförderung durch die Fördermittel 19 initiiert werden. Vorteilhafter Weise ist an der Verbindungseinheit 11 oder benachbart zu dieser ein Ventil ausgebildet, mittels welchem Luft bei der Rückförderung ansaugbar ist Grundsätzlich wird rückgefördert, bis die Förderleitung 6 im Wesentlichen in das Reservoir 20 entleert ist.

Bei starken Änderungen der Fördermenge der zu fördernden wässrigen Lösung 45, die beispielsweise auf einer stark ansteigenden Konzentration von Stickoxiden im Abgas der Verbrennungskraftmaschine zurückzuführen sein kann können Situationen eintreten, dass die Verdampfungseinheit 12 nicht in der Lage ist, plötzlich eine deutlich größere Menge an wässriger Lösung 45 zu verdampfen, da die entsprechend erhöhte Aufheizung nicht so schnell erfolgen kann. In diesem Falle ist es bevorzugt, die Fördermenge an wässriger Lösung 45 nur so zu erhöhen, dass gerade noch eine vollständige Verdampfung möglich ist.

Die Menge an zuzugebendem Reduktionsmittel und folglich auch die Menge an zu verdampfender wässriger Lösung 45 kann in Abhängigkeit beispielsweise von mindestens einer der folgenden Bedingungen bestimmt werden:
a) der Stickoxidkonzentration im Abgas;
b) einer prognostizierten Stickoxidgeneration, die bevorzugt dann vorliegt, wenn das Abgas den SCR-Katalysator 18 passiert;
c) der maximalen Menge an Reduktionsmittel, die gerade vom SCR-Katalysator 18 umgesetzt werden kann.

Reservoir 20, Förderleitung 6, Verdampfereinheit 12, Zugabeleitung 2, Verdampferkammer 24 und/oder Hydrolysekatalysator 17 können in thermischem Kontakt beispielsweise - zum Kraftstofftank der Verbrennungskraftmaschine ausgebildet sein. Dieser weist üblicherweise aus Frostschutzgründen eine Heizung auf, die dann auch Frostschutz für die oben angegebenen Bauteile bieten kann.

Gemäß einem weiteren vorteilhaften Aspekt wird eine Vorrichtung 1 zum Bereitstellen eines gasförmigen Stoffgemisches umfassend mindestens einen der vorliegenden Stoffe:
a) mindestens ein Reduktionsmittel und
b) mindestens einen Reduktionsmittelvorläufer vorgeschlagen.

Hierbei umfasst die Vorrichtung 1 ein Reservoir 20 für eine wässrige Lösung 45 umfassend mindestens einen Reduktionsmittelvorläufer. Aus dem Reservoir 20 ist die wässrige Lösung 45 mittels eines Fördermittels 19 in mindestens eine Zugabeleitung 2 mit Abgabeöffnung 3 förderbar. Vorteilhaft sind Mittel 4 zur Aufheizung der Zugabeleitung 2 ausgebildet, mit denen die mindestens eine Zugabeleitung 2 über eine kritische Temperatur aufheizbar ist, die größer als die Siedetemperatur von Wasser ist. Bevorzugt liegt diese Temperatur bei 350°C oder mehr, bevorzugt bei 400°C oder mehr, insbesondere bei etwa 380°C. Eine vorteilhafte Weiterbildung dieser Vorrichtung 1 sieht vor, dass das Fördermittel 19 mindestens eine Pumpe umfasst Bevorzugt handelt es sich hierbei um eine Dosierpumpe. Gemäß einer weiteren vorteilhaften Weiterbildung dieser Vorrichtung ist ein Ventil zur Dosierung der Menge der wässrigen Lösung 45 zwischen Fördermittel 19 und Zugabeleitung 2 ausgebildet. Weiterhin vorteilhaft umfassen die Mittel 4 zur Aufheizung mindestens eines der folgenden Elemente:
a) eine elektrische Widerstandsheizung;
b) Wärmeübertragungsmittel zur Nutzung der Abwärme mindestens eines anderen Bauteils;
c) mindestens ein Peltier-Element und
d) ein Mittel zur Verbrennung eines Kraftstoffes.

Eine weitere vorteilhafte Weiterbildung dieser Vorrichtung zeichnet sich dadurch aus, dass die Vorrichtung 1 so ausgebildet ist, dass im Betrieb die Temperatur über die Länge der Zugabeleitung 2 höchstens 25°C oberhalb und unterhalb einer mittleren Temperatur liegt.

Eine weitere vorteilhafte Ausgestaltung dieser Vorrichtung zeichnet sich dadurch aus, dass die Zugabeleitung 2 einen durchströmbaren Querschnitt von höchstens 20 mm² aufweist. Weiterhin vorteilhaft ist es, dass die Zugabeleitung 2 aus einem Material umfassend mindestens einen der folgenden Werkstoffe ausgebildet ist:
a) Kupfer;
b) Aluminium;
c) Nickelbasiswerkstoff;
d) Chrom-Nickel-Stahl und
e) Edelstahl.

Die Zugabeleitung 2 weist insbesondere eine Länge von 0,1 bis 5 m, bevorzugt eine Länge von 0,3 bis 0,7 m, besonders bevorzugt im Wesentlichen 0,5 m auf. Die Zugabeleitung 2 weist bevorzugt eine Wandstärke von 0,1 bis 0,5 mm auf. Die Zugabeleitung 2 weist bevorzugt eine Wärmekapazität von mindestens 150 J/K (Joule pro Kelvin) auf.

Gemäß einer vorteilhaften Ausgestaltung dieser Vorrichtung 1 haben die Zugabeleitung 2 und die Mittel 4 zur Aufheizung der Zugabeleitung 2 zumindest in mindestens einem Teilbereich mindestens eine der folgenden Anordnungen zueinander:
a) Zugabeleitung 2 und Mittel 4 zur Aufheizung der Zugabeleitung 2 sind zumindest in einem Teilbereich koaxial zueinander ausgebildet;
b) Zugabeleitung 2 und Mittel 4 zur Aufheizung der Zugabeleitung 2 sind zumindest in einem Teilbereich konzentrisch zueinander ausgebildet;
c) Zugabeleitung 2 und Mittel 4 zur Aufheizung der Zugabeleitung 2 sind zumindest in einem Teilbereich nebeneinander angeordnet;
d) die Zugabeleitung 2 ist zumindest in einem Teilbereich um das Mittel 4 zur Aufheizung der Zugabeleitung 2 herum gewunden ausgebildet;
e) das Mittel 4 zur Aufheizung der Zugabeleitung 2 stellt zumindest in Teilbereichen ein stabförmiges Heizelement 69 dar, um das die Zugabeleitung 2 herum gewunden ausgebildet ist und
f) die Zugabeleitung 2 bildet einen Kanal in einem stabförmigen Heizelement 69.

Gemäß einer weiteren vorteilhaften Ausgestaltung der Vorrichtung 1 sind die Zugabeleitung 2 und das Mittel 4 zur Aufheizung der Zugabeleitung 2 zumindest in Teilbereichen stoffschlüssig miteinander verbunden. Unter einer stoffschlüssigen Verbindung wird insbesondere eine Löt- und/oder Schweißverbindung verstanden.

Gemäß einer weiteren vorteilhaften Ausgestaltung der Vorrichtung 1 ist die Zugabeleitung 2 zumindest teilweise mit einer die Hydrolyse eines Reduktionsmittelvorläufers zu einem Reduktionsmittel katalysierenden Beschichtung versehen. Bevorzugt umfasst die Vorrichtung 1 mindestens einen Messfühler 5 zur Bestimmung der Temperatur der Zugabeleitung 2. Bevorzugt ist dieser Messfühler mit einer Stromquelle 5 verbindbar, um so beispielsweise im Rahmen eines Notfallprogramms eine Aufheizung der Zugabeleitung 2 über die kritische Temperatur hinaus ermöglicht.

Weiterhin wird ein vorteilhaftes Verfahren zum Bereitstellen eines gasförmigen Stoffgemisches umfassend mindestens einen der folgenden Stoffe:
a) mindestens ein Reduktionsmittel und
b) mindestens einen Reduktionsmittelvorläufer
beschrieben. Hierbei wird eine wässrige Lösung 45 mindestens eines Reduktionsmittelvorläufers aus einem Reservoir 20 in eine Zugabeleitung 2 gefördert. Die Zugabeleitung 2 wird dabei so beheizt, dass die wässrige Lösung 45 vollständig zu dem gasförmigen Stoffgemisch verdampft. Unter vollständig wird hierbei insbesondere eine Verdampfung verstanden, bei der 90 Gewichts-% und mehr der wässrigen Lösung, bevorzugt 95 Gewichts-% und mehr, besonders bevorzugt 98 Gewichts-% der wässrigen Lösung verdampft werden. Eine vorteilhafte Weiterbildung dieses Verfahrens ist darauf gerichtet, dass mindestens einer der Reduktionsmittelvorläufer
a) Harnstoff und
b) Amoniumformiat
in mindestens einer der folgenden Komponenten:
A) dem Stoffgemisch und
B) der wässrigen Lösung umfasst ist.

Weiter ist es vorteilhaft, dass die Temperaturen in der Zugabeleitung 2 bei einer mittleren Temperatur zwischen 380°C und 450°C liegen. Bevorzugt liegt die Temperatur über eine Länge der Zugabeleitung 2 höchstens 25°C oberhalb oder unterhalb einer mittleren Temperatur, bevorzugt einer mittleren Temperatur von 380°C bis 450°C.

Gemäß einer weiteren vorteilhaften Ausgestaltung dieses Verfahrens wird eine Heizleistung bei der Beheizung eingesetzt, die sich um bis zu 500 W/s ändert. Bevorzugt wird eine Menge von 0,5 ml/s der wässrigen Lösung 45 in die Zugabeleitung 2 gefordert. Weiterhin ist es bevorzugt, dass die Zugabeleitung 2 einen durchströmbaren Querschnitt von höchstens 20 mm² aufweist. Bevorzugt wird die Zugabeleitung 2 auf eine zweite Temperatur geheizt, die größer als die kritische Temperatur ist, bei der eine vollständige Verdampfung der wässrigen Lösung 45 erfolgt, um so gegebenenfalls vorhandene Ablagerungen aufzulösen.

Gemäß einer weiteren vorteilhaften Ausgestaltung dieses Verfahrens wird vor Beginn der Verdampfung die Temperatur der Zugabeleitung 2 bestimmt und mit anderen bekannten Temperaturen abgeglichen. Hierbei kann es sich beispielsweise um andere im Automobil bekannte oder gemessene Temperaturen handeln, wie beispielsweise die über einen Außentemperaturmessfühler gemessene äußere Temperatur oder die Kühlwassertemperatur.

Gemäß einer weiteren vorteilhaften Ausgestaltung dieses Verfahrens erfolgt die Aufheizung der Zugabeleitung 2 über eine elektrische Widerstandsheizung, wobei vor Beginn der Aufheizung der Widerstand dieser Widerstandsheizung bestimmt wird und in Abhängigkeit von dem ermittelten Widerstand eine Aufheizung der Zugabeleitung erfolgt. Eine weitere vorteilhafte Weiterbildung dieses Verfahrens ist darauf gerichtet, dass die eingebrachte Heizleistung bei der Beheizung der Zugabeleitung 2 überwacht wird. Gemäß einer weiteren vorteilhaften Ausgestaltung dieses Verfahrens wir die Beheizung unterbrochen, wenn die Heizleistung über eine vorgebbare Zeitspanne unter einem von der zu verdampfenden Menge wässriger Lösung abhängigen Wert bleibt.

Gemäß einem weiteren vorliegenden vorteilhaften Aspekt wird eine Vorrichtung 1 zum Bereitstellen eines gasförmigen Stoffgemisches umfassend mindestens einen der folgenden Stoffe:
a) mindestens ein Reduktionsmittel und
b) mindestens einen Reduktionsmittelvorläufer
beschrieben. Hierbei ist ein Reservoir 20 für eine wässrige Lösung 45 umfassend mindestens einen Reduktionsmittelvorläufer ausgebildet, das mit einer Verdampferkammer 24 in strömungstechnische Verbindung bringbar ist Weiter ist ein Mittel zum Dosieren der wässrigen Lösung 45 in die Verdampferkammer 24 ausgebildet, wobei Mittel 27, 63 zur Aufheizung der Verdampferkammer 24 ausgebildet sind, mit denen die Verdampferkammer 24 auf eine Temperatur größer oder gleich einer kritischen Temperatur aufheizbar ist, bei der die wässrige Lösung zumindest teilweise verdampft. Gemäß einer vorteilhaften Weiterbildung dieser Vorrichtung 1 umfassen die Mittel zum Dosieren der wässrigen Lösung 45 mindestens eine Düse 62. Vorteilhafter Weise hat die Verdampferkammer 24 ein im Wesentlichen abgeschlossenes Volumen, welches lediglich eine erste Öffnung 25 zum Anschluss einer Förderleitung 6 für die wässrige Lösung 45 und eine zweite Öffnung 26 zum Anschluss einer Zugabeleitung 2 zum Abführen des gasförmigen Stoffgemisches aufweist. Gemäß einer vorteilhaften Weiterbildung dieser Vorrichtung 1 umfasst die Verdampferkammer 24 ein im Wesentlichen abgeschlossenes Volumen, welches lediglich eine erste Öffnung 25 zum Anschluss einer Förderleitung 6 für die wässrige Lösung, eine zweite Öffnung 26 zum Anschluss einer Zugabeleitung 2 zum Abführen des gasförmigen Stoffgemisches und eine dritte Öffnung 36 zur Zugabe von Abgas 14 aufweist. Eine weitere vorteilhafte Weiterbildung dieser Vorrichtung sieht vor, dass die Mittel 27, 63 zur Aufheizung der Verdampferkammer 24 mindestens eines der folgenden Bauteile umfassen:
a) eine elektrische Widerstandsheizung 27 und
b) ein Mittel 63 zum Verbrennen eines Kraftstoffes.

Weiterhin ist es vorteilhaft, dass die Verdampferkammer 24 im Wesentlichen kugelsymmetrisch ist. Bevorzugt weist die Verdampferkammer 24 dabei einen Radius von 2 mm bis 25 mm auf. Weiter ist vorteilhaft, dass die Verdampferkammer 24 ein Volumen von 30 bis 4000 mm³ aufweist. Die Mittel 27, 63 zur Aufheizung der Verdampferkammer können eine Heizleistung von bis zu 5 kW aufbringen. Weiterhin ist vorteilhafter Weise eine Förderleitung 6 zur Förderung der wässrigen Lösung 45 ausgebildet, die die Verdampferkammer 24 mit einem Reservoir 20 verbindet und bei der ein Fördermittel 19 ausgebildet ist, mittels dessen ein Fluid durch die Förderleitung 6 förderbar ist Gemäß einer weiteren vorteilhaften Ausgestaltung dieser Vorrichtung ist diese so ausgebildet, dass im Betrieb die Temperatur der Verdampferkammer 24 höchstens 25°C oberhalb und unterhalb einer mittleren Temperatur liegt. Weiterhin ist es vorteilhaft, dass die Verdampferkammer 24 zumindest in Teilbereichen Mittel 28 zur Erhöhung der Benetzungsfähigkeit der Oberfläche aufweist. Dies kann insbesondere eine Strukturierung der inneren Oberfläche (Vorsprünge oder ähnliches) der Verdampferkammer 24 umfassen.

Weiterhin wird ein Verfahren zum Bereitstellen eines gasförmigen Stoffgemisches umfassend mindestens einen der folgenden Stoffe:
a) mindestens ein Reduktionsmittel und
b) mindestens einen Reduktionsmittelvorläufer
beschrieben. Eine wässrige Lösung 45 mindestens eines Reduktionsmittelvorläufers wird in eine Verdampferkammer 24 gefordert, wobei die Verdampferkammer 24 so beheizt wird, dass die wässrige Lösung 45 vollständig zu dem gasförmigen Stoffgemisch verdampft. Dieses Verfahren kann vorteilhafter Weise dadurch fortgebildet werden, dass die Verdampferkammer 24 ein im Wesentlichen abgeschlossenes Volumen umfasst, welches lediglich eine erste Öffnung 25 zum Anschluss einer Förderleitung 6 für die wässrige Lösung 45 und eine zweite Öffnung 26 zum Anschluss einer Zugabeleitung 2 zum Abführen des gasförmigen Stoffgemisches aufweist.

Alternativ dazu kann die Verdampferkammer 24 ein im Wesentlichen abgeschlossenes Volumen umfassen, welches lediglich eine erste Öffnung 25 zum Anschluss einer Förderleitung 6 für die wässrige Lösung 45, eine zweite Öffnung 26 zum Anschluss einer Zugabeleitung 2 zum Abführen des gasförmigen Stoffgemisches und eine dritte Öffnung 36 zur Zugabe von Abgas 14 aufweist.

Vorteilhaft können diese Verfahren dadurch weitergebildet werden, dass die Aufheizung geregelt erfolgt. Insbesondere wird die Verdampferkammer 24 auf eine mittlere Temperatur von 350 bis 450°C aufgeheizt. Weiterhin ist es vorteilhaft, dass die Verdampferkammer 24 so auf eine mittlere Temperatur aufgeheizt wird, dass an keinem Punkt der Verdampferkammer 24 die Temperatur um mehr als +25°C oder -25°C von einer mittleren Temperatur abweicht

Die erfindungsgemäße Vorrichtung 15 erlaubt in vorteilhafter Weise die Bereitstellung einer genügend großen Menge Reduktionsmittel für die selektive katalytische Reduktion von Stickoxiden im SCR-Katalysator 18, wobei gleichzeitig der Hydrolysekatalysator 17 kleinvolumiger ausgeführt werden kann als aus dem Stand der Technik bekannt, da hier der Hydrolysekatalysator 17 nicht von Abgas durchströmt wird.

### Bezugszeichenliste

- 1: Vorrichtung zum Bereitstellen eines gasförmigen Stoffgemisches
- 2: Zugabeleitung
- 3: Abgabeöffnung
- 4: Mittel zur Aufheizung der Zugabeleitung
- 5: Messfühler
- 6: Förderleitung
- 7: Mittel zum Temperieren
- 8: Peltier-Element
- 9: Kühlkörper
- 10: Elektrischer Anschluss
- 11: Verbindungseinheit
- 12: Verdampfereinheit
- 13: Abgas
- 14: Abgasleitung
- 15: Vorrichtung zur Aufbereitung des Abgases einer Verbrennungskraftmaschine
- 16: Reduktionsmittellösungsverdampfer
- 17: Hydrolysekatalysator
- 18: SCR-Katalysator
- 19: Fördermittel
- 20: Reservoir
- 21: Dosierleitung
- 22: Dosieröffnung
- 23: Vermischungsmittel
- 24: Verdampferkammer
- 25: Erste Öffnung
- 26: Zweite Öffnung
- 27: Mittel zur Aufheizung der Verdampferkammer
- 28: Struktur
- 29: Ummantelung der Verdampfereinheit
- 30: Heizleiteranschluss
- 31: Mittel zur Temperierung des Hydrolysekatalysators
- 32: Ummantelung des Hydrolysekatalysators
- 33: Verbindungsmittel
- 34: Leitblech
- 35: Reduktionsmittelstoffgemisch
- 36: Dritte Öffnung
- 37: Leitstruktur
- 38: Heizleiter
- 39: Erster Temperaturmessfühler
- 40: Verbindungselement
- 41: Erster Heizleiteranschluss
- 42: Zweiter Heizleiteranschluss
- 43: Zweiter Temperaturmessfühler
- 44: Zweites Verbindungselement
- 45: Wässrige Lösung
- 46: Zugabeeinheit
- 47: Dritter Temperaturmessfühler
- 48: Vierter Temperaturmessfühler
- 49: Temperiermittel
- 50: Zugabetemperiermittel
- 51: Steuereinheit
- 52: Wabenkörper
- 53: Vermischungsmittel
- 54: Hauptströmungsrichtung
- 55: Aussparung
- 56: Perforation
- 57: Länge
- 58: erster Abgasstrang
- 59: zweiter Abgasstrang
- 60: Mittel zur Strömungsleitung
- 61: Einmündung
- 62: Düse
- 63: Mittel zum Verbrennen von Kohlenwasserstoffen
- 64: Mittel zum Abscheiden von Tropfen
- 65: Leitung
- 66: Prallplatte
- 67: Umlenkung
- 68: Gehäuse
- 69: Stabförmiges Heizelement
- 70: elektrischer Anschluss
- 71: Verbindungsmittel
- 72: Thermische Isolierung
- 73: Wärmeschild
- 74: Luftspaltisolierung
- 75: Außengehäuse
- 76: Innengehäuse
- 77: Ventil
- 78: Steueranschluss
- 79: Mündungsbereich
- 80: Blende
- 81: Temperatursensor
- 82: Wabenkörper
- 83: glatte metallische Lage
- 84: gewellte metallische Lage
- 85: Mantelrohr
- 86: Kanal
- 87: ringförmiger Wabenkörper
- 88: Lage
- 89: glatter Bereich
- 90: gewellter Bereich
- 91: äußeres Mantelrohr
- 92: inneres Mantelrohr

## Patentansprüche

1. Vorrichtung (15) zur Aufbereitung des Abgases einer Verbrennungskraftmaschine, zumindest umfassend:
- einen Reduktionsmittellösungsverdampfer (16),
- einen mit dem Reduktionsmittellösungsverdampfer (16) verbundenen Hydrolysekatalysator (17) zur Hydrolyse von insbesondere Harnstoff zu Ammoniak und
- einen SCR-Katalysator (18) zur selektiven katalytischen Reduktion von Stickoxiden,
wobei der Reduktionsmittellösungsverdampfer (16) eine Verdampfereinheit (12) zum Bereitstellen eines gasförmigen Stoffgemisches umfassend mindestens einen der folgenden Stoffe umfasst:
a) mindestens einen Reduktionsmittelvorläufer und
b) ein Reduktionsmittel
wobei mit der Verdampfereinheit (12) eine wässrige Lösung (45) umfassend mindestens einen Reduktionsmittelvorläufer verdampfbar ist, wobei der SCR-Katalysator (18) in der Abgasleitung (14) ausgebildet ist, **dadurch gekennzeichnet, dass** der Reduktionsmittellösungsverdampfer (16) und der Hydrolysekatalysator (17) außerhalb der Abgasleitung (14) und mit dieser verbindbar ausgebildet sind, wobei zumindest Teile der Verdampfereinheit und der Hydrolysekatalysator jeweils ein Mittel zum Temperieren aufweisen, wobei der Reduktionsmittellösungsverdampfer (16) und der Hydrolysekatalysator (17) jeweils unabhängig voneinander geregelt beheizbar sind.

2. Vorrichtung nach Anspruch 1, bei der der Hydrolysekatalysator (17) ein Volumen von weniger als 100 ml [Milliliter] aufweist.

3. Vorrichtung nach Anspruch 1 oder 2, bei der der Hydrolysekatalysator (17) einen metallischen Wabenkörper umfasst.

4. Vorrichtung nach Anspruch 3, wobei der Wabenkörper aus einem Stahl mit Werkstoffnummer 1.472 nach deutschem Stahlschlüssel und/oder Aluminium aufgebaut ist.

5. Vorrichtung nach einem der vorhergehenden Ansprüche, wobei der Hydrolysekatalysator (17) von Wänden begrenzte Kanäle aufweist, wobei die Wände höchstens 80 µm [Mikrometer] dick sind.

6. Vorrichtung nach einem der vorhergehenden Ansprüche, wobei der Hydrolysekatalysator (17) eine Zelldichte von weniger als 600 cpsi (Zellen pro Quadratzoll, cells per square inch) aufweist.

## Claims

1. Device (15) for treating the exhaust gas of an internal combustion engine, at least comprising:
- a reducing agent solution evaporator (16),
- a hydrolysis catalytic converter (17), which is connected to the reducing agent solution evaporator (16), for the hydrolysis of in particular urea to form ammonia, and
- an SCR catalytic converter (18) for the selective catalytic reduction of nitrogen oxides,
with the reducing agent solution evaporator (16) comprising an evaporator unit (12) for providing a gaseous substance mixture comprising at least one of the following substances:
a) at least one reducing agent precursor, and
b) a reducing agent
with it being possible, by means of the evaporator unit (12), for an aqueous solution (45) comprising at least one reducing agent precursor to be evaporated, with the SCR catalytic converter (18) being formed in the exhaust line (14), **characterized in that** the reducing agent solution evaporator (16) and the hydrolysis catalytic converter (17) are formed outside the exhaust line (14) and such that they can be connected to the latter, wherein at least parts of the evaporator unit and of the hydrolysis catalytic converter respectively have a means for temperature control, wherein the reducing agent solution evaporator (16) and the hydrolysis catalytic converter (17) are in each case heatable in mutually independently regulated fashion.

2. Device according to Claim 1, in which the hydrolysis catalytic converter (17) has a volume of less than 100 ml [millilitres].

3. Device according to Claim 1 or 2, in which the hydrolysis catalytic converter (17) comprises a metallic honeycomb body.

4. Device according to Claim 3, wherein the honeycomb body is constructed from a steel with material number 1.4725 according to the German Key to Steel, and/or from aluminium.

5. Device according to one of the preceding claims, wherein the hydrolysis catalytic converter (17) has ducts delimited by walls, wherein the walls are at most 80 µm [micrometres] thick.

6. Device according to one of the preceding claims, wherein the hydrolysis catalytic converter (17) has a cell density of less than 600 cpsi (cells per square inch).

## Revendications

1. Dispositif (15) de traitement des gaz d'échappement d'un moteur à combustion interne, comprenant au moins :
- un évaporateur (16) d'une solution d'agent réducteur,
- un pot catalytique (17) d'hydrolyse, relié à l'évaporateur (16) d'une solution d'agent réducteur, pour l'hydrolyse, notamment d'urée en ammoniac et
- un pot catalytique (18) SCR pour la réduction catalytique sélective d'oxydes d'azote,
dans lequel l'évaporateur (16) d'une solution d'agent réducteur comprend une unité (12) d'évaporateur pour la mise à disposition d'un mélange gazeux comprenant au moins l'une des substances suivantes :
a) au moins un précurseur d'agent réducteur et
b) un agent réducteur
dans lequel, par l'unité (12) d'évaporateur, une solution (45) aqueuse comprenant au moins un précurseur d'agent réducteur peut être évaporée, le pot catalytique (18) SCR étant constitué dans le conduit (14) pour les gaz d'échappement, **caractérisé en ce que** l'évaporateur (16) d'une solution d'agent réducteur et le pot catalytique (17) d'hydrolyse sont constitués à l'extérieur du conduit (14) pour les gaz d'échappement et peuvent communiquer avec celui-ci, au moins des parties de l'unité d'évaporateur et du pot catalytique d'hydrolyse ayant respectivement un moyen de mise en température, l'évaporateur (16) d'une solution d'agent réducteur et le pot catalytique (17) d'hydrolyse pouvant être chauffés d'une manière régulée respectivement indépendamment l'un de l'autre.

2. Dispositif suivant la revendication 1, dans lequel le pot catalytique (17) d'hydrolyse a un volume de moins de 100 ml [millilitres].

3. Dispositif suivant la revendication 1 ou 2, dans lequel le pot catalytique (17) d'hydrolyse comprend un nid d'abeilles métallique.

4. Dispositif suivant la revendication 3, dans lequel le nid d'abeilles est en un acier ayant le numéro de matériau 1.4725 suivant le classement des aciers allemands et/ou en aluminium.

5. Dispositif suivant l'une des revendications précédentes, dans lequel le pot catalytique (17) d'hydrolyse a des canaux délimités par des parois, les parois ayant une épaisseur d'au plus 80 µm [micromètres].

6. Dispositif suivant l'une des revendications précédentes, dans lequel le pot catalytique (17) d'hydrolyse a une densité de cellules de moins de 600 cpsi (cellules par pouce carré, cells per square inch).
